# EUROPÄISCHE PATENTSCHRIFT

(11) **EP 4 185 178 B1**
(45) Veröffentlichungstag und Bekanntmachung des Hinweises auf die Patenterteilung: **28.08.2024**
(21) Anmeldenummer: 21748862.6
(22) Anmeldetag: 22.07.2021
(51) Int. Cl.: A47L 11/30, A47L 11/40

(54) **BODENREINIGUNGSVORRICHTUNG, INSBESONDERE SCHEUER-SAUG-BODENREINIGUNGSVORRICHTUNG, MIT VERBESSERTEN MANÖVRIEREIGENSCHAFTEN**
FLOOR-CLEANING APPLIANCE, IN PARTICULAR A FLOOR SCRUBBER, HAVING IMPROVED MANOEUVRING PROPERTIES
DISPOSITIF DE NETTOYAGE DE SOLS, EN PARTICULIER DISPOSITIF DE NETTOYAGE DE SOLS PAR FROTTEMENT ET ASPIRATION, À PROPRIÉTÉS DE MANOEUVRE AMÉLIORÉES

(30) Priorität: 22.07.2020 DE 102020004413
(43) Veröffentlichungstag der Anmeldung: 31.05.2023
(73) Patentinhaber: i-mop GmbH, 64625 Bensheim (DE)
(72) Erfinder: FRANKE, Rudolf, 64625 Bensheim (DE)
(74) Vertreter: Thum, Bernhard
(86) Internationale Anmeldenummer: PCT/EP2021/070567
(87) Internationale Veröffentlichungsnummer: WO 2022/018216

(56) Entgegenhaltungen:
- EP-A2- 2 832 277
- DE-A1- 102009 028 944
- DE-A1- 102016 208 895

## Beschreibung

Die vorliegende Erfindung betrifft eine Bodenreinigungsvorrichtung, insbesondere eine Scheuer-Saug-Bodenreinigungsvorrichtung, wie beispielsweise einen Nass-Bodenreinigungsvorrichtung, umfassend:
- eine Bodeneinheit, der eine Vortriebsrichtung parallel zu einer zu reinigenden Bodenfläche zugeordnet ist,
- ein Werkzeug, das der Bodeneinheit zugeordnet ist und das in einem Betriebszustand die Bodenfläche kontaktiert, wobei das Werkzeug mittels eines Antriebs relativ zu der Bodenfläche bewegbar ist;
- ein Führungsteil zum Führen der Bodenreinigungsvorrichtung; und
- eine Gelenkanordnung, die die Bodeneinheit und das Führungsteil gelenkig miteinander verbindet;

wobei die Bodenreinigungsvorrichtung vorzugsweise dazu eingerichtet ist, eine Vortriebswirkung gegenüber der Bodenfläche in Vortriebsrichtung zu erzeugen,
wobei die Gelenkanordnung mit einem ersten Schwenkgelenk ausgebildet ist, das einen ersten Schwenkbereich mit einer festgelegten oder virtuellen ersten Schwenkachse aufweist und eine Schwenkbewegung des Führungsteils relativ zur Bodeneinheit um den ersten Schwenkbereich, insbesondere um die erste Schwenkachse zulässt,
wobei die erste Schwenkachse in einer ersten Schwenkachsenebene liegt, die senkrecht zur Bodenfläche verläuft und die einen die Vortriebsrichtung definierenden Richtungsvektor enthält.

Reinigungsvorrichtungen mit unterschiedlich komplexem Aufbau sind aus dem Stand der Technik bekannt.

Als nächstkommender Stand der Technik für die vorliegende Erfindung wird das Dokument DE 10 2009 028 944 A1 genannt. Darin ist eine Bodenreinigungsvorrichtung mit den Merkmalen des Oberbegriffs gemäß dem vorliegenden Patentanspruch 1 beschrieben. Obwohl sich diese Vorrichtung in ihrem Grundaufbau aufgrund der vorteilhaften Manövrierfähigkeit in der Praxis bewährt hat, waren Weiterentwicklungen erforderlich.

Die deutsche Gebrauchsmusterschrift DE 20 2013 012 528 U9 beschreibt eine Bodenreinigungsvorrichtung, bei der eine vorteilhafte Anordnung zweier Reinigungswerkzeuge in Verbindung mit einer Saugleiste die Reinigungs- und Vortriebsfunktion gegenüber DE 10 2009 028 944 A1 verbessert.

Ferner zeigt beispielsweise das Dokument EP 2 832 277 B1 eine auf dem Gegenstand von DE 10 2009 028 944 A1 aufbauende Weiterentwicklung mit verbesserten Vortriebseigenschaften und mit einem im Führungsteil integrierten Saugantrieb.

Das Dokument DE 10 2016 208 895 A1 beschreibt eine Bodenreinigungsvorrichtung mit einer platzsparenden Anordnung von Antriebskomponenten in der Bodeneinheit.

Das erteilte europäische Patent EP 3 031 378 B1 beschreibt eine Bodenreinigungsvorrichtung, die Vorkehrungen vorsieht, um die Vorrichtung bedarfsweise zwischen einer Betriebsstellung und einer raumsparenden Transport- oder Lagerstellung verlagern zu können.

Als weiterer Stand der Technik wird auf die Dokumente US 2013/0133146 A1, US 2012/0246848 A1 sowie US 2,818,312 verwiesen, die allesamt ausladende Gabelanordnungen aufweisen, die um eine quer zur Vortriebsrichtung verlaufende Achse schwenkbar sind.

Es hat sich gezeigt, dass all diese Vorrichtungen trotz punktueller Weiterentwicklungen und zunehmender Integration der einzelnen Komponenten zumindest in bestimmten Betriebssituationen für eine Bedienungsperson schwer zu manövrieren sind. Zum großen Teil besitzen diese Vorrichtungen den Nachteil, dass aufgrund der Anbringung von Energieversorgungselementen, Reinwasser- bzw. Schmutzwassertanks, sowie verschiedener Bedienungs-, Steuerungs- und Antriebskomponenten am Führungsteil das Führungsteil selbst zum Teil größer und auch schwerer wird, was zwar die Bodeneinheit kompakter gestalten lässt, aber die Handhabung insbesondere bei längerem Betrieb für eine Bedienungsperson schwierig macht. Auch wenn die Manövriereigenschaften durch die vorstehend im Hinblick auf den Stand der Technik geschilderten Weiterentwicklungen in der Bodeneinheit teilweise verbessert werden konnten, ist es für eine Bedienungsperson beim Stand der Technik doch erforderlich, während der Bedienung je nach Bedienungssituation einen mehr oder weniger gro-ßen Anteil der Gewichtskraft des Führungsteils zu übernehmen. Dies kann auf Dauer zu einer Ermüdung der Bedienungsperson führen. Darüber hinaus leidet auch die Wendigkeit der Bodenreinigungsvorrichtung darunter.

Es ist daher eine Aufgabe der vorliegenden Erfindung, eine Bodenreinigungsvorrichtung der eingangs bezeichneten Art bereitzustellen, die sich die aus dem Stand der Technik bekannten Vorteile weitgehend zu Nutze macht und die auch dem Erfordernis einer Verbesserung der Manövriereigenschaften Rechnung trägt.

Diese Aufgabe wird durch eine Bodenreinigungsvorrichtung der eingangs bezeichneten Art gelöst, bei der vorgesehen ist, dass in einem Manövrierbetriebszustand das Führungsteil um die erste Schwenkachse relativ zu der Bodeneinheit verschwenkbar ist, wobei das Führungsteil in der ersten Schwenkachsenebene relativ zu der Bodeneinheit oder zum Boden fixierbar oder temporär abstützbar ist, wobei infolge der Schwenkbewegung des Führungsteils um die erste Schwenkachse unter Vermittlung der Abstützung des Führungsteils in der Schwenkachsenebene die Vortriebswirkung oder/und eine Manövrierbewegung einer Bedienungsperson ein das Manövrieren der Bodenreinigungsvorrichtung begünstigendes, vorzugsweise um eine zur Bodenfläche im wesentlichen senkrechte Rotationsachse wirkendes, Rotationsmoment der Bodeneinheit auf der Bodenfläche bewirkt. Eine derartige Manövrierbewegung kann beispielsweise ein leichtes dezentrales Gegenhalten der Bedienungsperson am Führungsteil gegen die Vortriebswirkung sein, das zusammen mit der Vortriebswirkung an der Bodeneinheit zu dem Rotationsmoment der Bodeneinheit auf der Bodenfläche führt.

Wenn im Zusammenhang mit dem ersten Schwenkbereich davon die Rede ist, dass dieser eine festgelegte oder eine virtuelle erste Schwenkachse aufweist, bedeutet dies im Rahmen dieses Dokuments, dass der Schwenkbereich als eine Art Gelenk mit einer dauerhaften Schwenkachse ausgeführt sein kann oder derart ausgestaltet sein kann, dass sich die Schwenkachse während einer Schwenkbewegung mit der Zeit ändert, beispielsweise bei einer Verschwenkung um ein über einen größeren Bereich flexibles Federelement, wie beispielsweise einem elastischen Körper oder einer Schrauben- bzw. Blattfeder oder dergleichen, oder mittels einer Bogenführung. Wichtig ist aber, dass die Verschwenkung um den ersten Schwenkbereich geführt erfolgt und dass die festgelegte Schwenkachse bzw. die virtuelle Schwenkachse, d. h. die in der jeweiligen Phase der Verschwenkung aktuell wirksame sich jedoch über den Grad der Verschwenkung um den Schwenkbereich ändernde Schwenkachse, in der ersten Schwenkachsenebene liegen.

Die erfindungsgemäße Bodenreinigungsvorrichtung zeichnet sich also dadurch aus, dass in einem Manövrierbetriebszustand das Führungsteil gegenüber der Bodeneinheit in nachfolgend noch im Detail erläuterter Weise fixiert oder temporär abstützbar oder dauerhaft abstützbar ist, und zwar vollständig oder zumindest teilweise, sodass über die Abstützung die Gewichtskraft des Führungsteils auf das Bodenteil und schließlich auf den zu reinigenden Boden wirkt. Es ist also für eine Bedienungsperson dann, wenn bei der erfindungsgemäßen Bedienungsvorrichtung während des Manövrierbetriebszustands das Führungsteil nach hinten (d.h. zur Bedienungsperson hin) geneigt und dadurch abgestützt wird oder wenn dieses aufgrund des Maschinenaufbaus mit seinem Griffabschnitt bereits nach hinten steht, nicht länger erforderlich, die Gewichtskraft des Führungsteils in gleicher Weise zu übernehmen, wie dies beim Stand der Technik der Fall ist. Dabei wird schon dann eine Verbesserung erzielt, wenn der Anteil der üblicherweise von der Bedienungsperson zu übernehmenden Gewichtskraft über die Abstützung reduziert werden kann. Eine nur teilweise Abstützung der Gewichtskraft ist bereits vorteilhaft. Die vollständige oder zumindest teilweise Einleitung der Gewichtskraft des Führungsteils in die Bodeneinheit während des Manövrierbetriebszustands über die Abstützung bietet hinsichtlich der Manövriereigenschaften der erfindungsgemäßen Bodenreinigungsvorrichtung zusätzliche Vorteile, je nachdem, wo der über die Abstützung übernommene Anteil der Gewichtskraft an der Bodeneinheit angreift. Die Neigung des Führungsteils bezüglich der Vortriebsrichtung bezieht sich beispielsweise auf eine Führungsteillängsachse, die im Wesentlichen orthogonal zur ersten Schwenkachse in Längsrichtung des Führungsteils verläuft und sich durch eine Wirklinie erstreckt, die durch Angriffspunkte für eine Bedienungsperson am Führungsteil zum Manövrieren der Bodenreinigungsvorrichtung bestimmt ist, beispielsweise durch Handgriffe.

Jedenfalls hat die zumindest teilweise Abstützung der Gewichtskraft des Führungsteils an der Bodeneinheit den Effekt, dass bei einer Verschwenkung des Führungsteils relativ zur Bodeneinheit um die erste Schwenkachse der Gelenkanordnung in der Bodeneinheit oder/und einer Manövrierbewegung der Bedienungsperson am Führungsteil eine dezentrale, d.h. zu einer Seite hin verlagerte, Gewichtsverteilung erfolgt. Diese führt an sich bereits zu einem Rotationsmoment in der Bodeneinheit, vorzugsweise um eine zur Bodenfläche senkrechte Rotationsachse. Dieses Rotationsmoment, das die Manövriereigenschaften der erfindungsgemäßen Bodenreinigungsvorrichtung positiv beeinflusst, wird dadurch verstärkt, dass vorzugsweise über das wenigstens eine rotierende Werkzeug oder mittels anderer Komponenten eine Vortriebswirkung in der Bodeneinheit erzeugt werden kann, die aufgrund der dezentralen Gewichtsverteilung eine Lenkbewegung zusätzlich unterstützt. Aufgrund des verschwenkten Führungsteils wird die entlang des Führungsteils wirkende Kraft mit einer vertikalen Kraftkomponente und einer horizontalen Kraftkomponente auf die Bodeneinheit übertragen. Während die vertikale Kraftkomponente vollständig oder teilweise über die Gelenkanordnung und Abstützung in die Bodeneinheit eingeleitet werden kann, wirkt die horizontale Kraftkomponente als Querkraft in der Bodeneinheit. Dies führt dazu, dass sich insbesondere im Zusammenhang mit der gegenhaltenden Manövrierbewegung der Bedienungsperson in bestimmten Bereichen der Bodeneinheit die Vortriebswirkung stärker bemerkbar macht, wodurch die Manövriereigenschaften positiv beeinflusst werden, wie im Folgenden im Detail erläutert. Die Erfindung nutzt also die aufgrund des verschwenkten Führungsteils mit einer Querkomponente in die Bodeneinheit eingeleitete Gewichtskraft des Führungsteils zusammen mit der Manövrierbewegung unter Vermittlung der Vortriebswirkung zur Verbesserung der Manövriereigenschaften der gesamten Bodenreinigungsvorrichtung. Die Vorteile der Erfindung kommen aber auch, wenn auch in geringerem Umfang, dann zu tragen, wenn das wenigstens eine rotierende Werkzeug keine Vortriebswirkung erzeugt.

Gemäß einer Weiterbildung der erfindungsgemäßen Bodenreinigungsvorrichtung kann vorgesehen sein, dass die erste Schwenkachse mit dem die Vortriebsrichtung definierenden Richtungsvektor in dem Manövrierbetriebszustand einen spitzen Winkel in einem Bereich von 5°-85° einschließt, vorzugsweise von 15° bis 45°. Dies bedeutet, dass die erste Schwenkachse derart ausgerichtet ist, dass das Führungsteil in einem Reinigungsbetriebszustand bzw. Manövrierbetriebszustand der Bodenreinigungsvorrichtung nach hinten zu Bedienungsperson geneigt ist. Dadurch ist es möglich, dass sich aus der Gewichtskraft des Führungsteils über die Fixierung bzw. Abstützung des Schwenkgelenks ein Kippmoment in der Bodeneinheit quer zur ersten Schwenkachse ergibt und dem Kippmoment ein Gegenmoment zumindest teilweise entgegenwirkt. Dies ist insbesondere dann der Fall, wenn der Griffabschnitt in einer vertikalen Projektion auf die Bodenfläche hinter der Bodeneinheit liegt.

Eine Ausführungsvariante der Erfindung sieht vor, dass das erste Schwenkgelenk an der Bodeneinheit um die erste Schwenkachse dauerhaft fixiert oder in vorbestimmten Positionen arretierbar ist, die die Ausrichtung der ersten Längsachse zu dem die Vortriebsrichtung definierenden Richtungsvektor in dem Manövrierbetriebszustand bestimmen. Mit anderen Worten lässt sich das erste Schwenkgelenk um die erste Schwenkachse in einer bestimmten Ausrichtung dauerhaft oder in vorbestimmten Positionen arretieren. Über die dauerhafte oder temporär gewählte Arretierung kann dann die Abstützung der Gewichtskraft des Führungsteils in die Bodeneinheit erreicht werden. Ferner ergeben sich daraus die bereits geschilderten vorteilhaften Manövriereigenschaften.

Alternativ zu einer dauerhaften oder vorgegebenen Arretierung sieht eine Weiterbildung der Erfindung vor, dass die Gelenkanordnung mit einem zweiten Schwenkgelenk ausgebildet ist, das einen zweiten Schwenkbereich mit einer festgelegten oder virtuellen zweiten Schwenkachse aufweist und eine Schwenkbewegung des Führungsteils relativ zur Bodeneinheit um den zweiten Schwenkbereich zulässt. Die zweite Schwenkachse verläuft im wesentlichen parallel zur Bodenfläche und quer zur ersten Schwenkachse. Bodenreinigungsvorrichtungen mit zwei Schwenkgelenken mit quer, insbesondere orthogonal, zueinander verlaufenden Schwenkachsen sind bereits aus dem Stand der Technik bekannt. So zeigt bereits das Dokument DE 10 2009 028 944 A1 eine derartige Gelenkanordnung mit doppeltem Schwenkgelenk. Eine derartige Gelenkanordnung verbessert zwar die Manövriereigenschaften gegenüber früherem Stand der Technik, hat jedoch den Nachteil, dass im Manövrierbetriebszustand ein nicht unerheblicher Anteil des Gewichts des Führungsteils von der Bedienungsperson übernommen werden muss, wie vorstehend erläutert. Die vorliegende Erfindung sieht vor, dass die Gelenkanordnung über die Abstützung dauerhaft oder bedarfsweise temporär in einen Zustand gebracht werden kann, in der dieser Nachteil überwunden wird. Die Abstützung der Gelenkanordnung kann unmittelbar an bzw. in der Gelenkanordnung erfolgen. Alternativ kann die Abstützung der Gelenkanordnung über die Anbringung der Abstützeinrichtung am Führungsteil erfolgen, wobei sich die Abstützeinrichtung dann an der Bodeneinheit oder direkt am Boden abstützt. Gemäß einer weiteren Alternative kann die Abstützung der Gelenkanordnung über die Anbringung der Abstützeinrichtung an der Bodeneinheit erfolgen, wobei die Abstützeinrichtung dann das Führungsteil stützt.

In diesem Zusammenhang sieht eine vorteilhafte Ausführungsvariante der Erfindung vor, dass der Gelenkanordnung eine Abstützeinrichtung funktional zugeordnet ist, die in dem Manövrierbetriebszustand die Gelenkanordnung mit dem ersten Schwenkgelenk relativ zu der Bodeneinheit zumindest temporär oder/und zumindest teilweise in dem Manövrierbetriebszustand abstützt. Eine derartige Abstützeinrichtung kann beispielsweise manuell angebracht, elektrisch bzw. elektromagnetisch zugeschaltet oder dauerhaft vorhanden sein, gegebenenfalls auch mit linearer oder progressiver oder degressiver Abstützungskennlinie. Wie vorstehend bereits ausgeführt kann die Abstützung der Gelenkanordnung unmittelbar an der Gelenkanordnung erfolgen oder mittelbar über die Anbringung der Abstützeinrichtung am Führungsteil oder an der Bodeneinheit.

Eine einfache mechanische Ausführungsvariante sieht in diesem Zusammenhang vor, dass die Abstützeinrichtung zumindest temporär in wenigstens einer Arretierposition, bevorzugt in wenigstens zwei, besonders bevorzugt in wenigstens drei Arretierpositionen, arretierbar ist. Alternativ hierzu kann vorgesehen sein, dass die Abstützeinrichtung stufenlos arretierbar ist.

Dabei ist es in einer Ausführungsvariante der Erfindung möglich, dass die Abstützeinrichtung starr ausgebildet ist. Dies ist beispielsweise über eine Abstützstrebe, einen Abstützwinkel, eine abstützende Auffanggabel oder einen Sperrbügel realisierbar.

Alternativ zu einer rein starren Abstützeinrichtung kann erfindungsgemäß vorgesehen sein, dass die Abstützeinrichtung ein Federelement umfasst, das eine lineare, gestufte, degressive (abnehmend) oder progressive (zunehmend) Stützwirkung in Abhängigkeit von dem Winkel zwischen der ersten Schwenkachse und dem die Vortriebsrichtung definierenden Richtungsvektor aufweist. Es kann auch eine Kombination von progressivem und degressivem Verlauf der bei der Abstützung wirkenden Stützkraft vorgesehen sein, beispielsweise derart, dass das Federelement derart angeordnet ist, dass die Abstützeinrichtung zunächst eine progressive Stützwirkung über einen bestimmten Winkelbereich und anschließend eine degressive Stützwirkung oder umgekehrt bereitstellt.

Zur Vermeidung von unerwünschten Schwingungseffekten, insbesondere bei der Verwendung von federnden Abstützeinrichtungen oder zur Vermeidung von einem abrupten Erreichen eines Abstützzustandes, kann eine Weiterbildung der Erfindung vorsehen, dass der Abstützeinrichtung ein Dämpferelement zugeordnet ist. Mit dieser Maßnahme lässt sich beispielsweise ein sanfter gedämpfter Übergang zwischen einem nicht abgestützten und einem teilweise oder vollständig abgestützten Zustand erreichen.

Eine Weiterbildung der Erfindung sieht vor, das Führungsteil nicht nur in der ersten Schwenkachsenebene abzustützen, sondern zusätzlich eine der ersten Schwenkachse zugeordnete weitere Abstützeinrichtung vorzusehen, die dazu eingerichtet ist, das Führungsteil auch beim Verschwenken um die erste Schwenkachse aus der ersten Schwenkachsenebene heraus gegenüber der Bodeneinheit ab einem vorgegebenen oder vorgebbaren Schwenkwinkel zumindest teilweise abzustützen. Mit anderen Worten kann das Führungsteil auch bei einem seitlichen Verschwenken zumindest ab einem bestimmten Schwenkwinkel abgestützt werden. Die Abstützung kann gemäß vorstehender Beschreibung erfolgen, beispielsweise starr, federnd und/oder gedämpft. Es wird auf die vorstehenden Ausführungen zur Abstützung bezüglich der ersten Schwenkachse verwiesen, die an dieser Stelle analog auch für eine Abstützung bezüglich einer Bewegung um die zweite Schwenkachse gelten.

Eine Weiterbildung der Erfindung sieht vor, dass die Abstützeinrichtung dazu ausgebildet ist, das Führungsteil beim Verschwenken um die ersten Schwenkachse gegenüber der Bodeneinheit zu führen, vorzugsweise entlang einer bogenförmigen Bahn. Hierzu kann die Abstützeinrichtung mit einer Führungsbahn versehen sein, in der ein Führungsschlitten geführt ist, auf den das Führungsteil aufgelegt oder mit den das Führungsteil über einen Formschluss oder Kraftschluss gekoppelt wird. Die Kopplung kann beispielsweise durch eine Magnetanordnung der zukommenden Teile unterstützt werden. Ferner kann in diesem Zusammenhang vorgesehen sein, dass die Abstützeinrichtung dazu ausgebildet ist, das Führungsteil beim Verschwenken um die erste Schwenkachse federnd abzustützen, vorzugsweise mit zunehmendem Schwenkwinkel progressiv federnd. So ist es möglich, eine Art Rückstellmoment oder Rückstellkraft bereitzustellen, die mit zunehmender Auslenkung des Führungsteils aus einer im wesentlichen mittigen Neutralposition zunimmt. Dadurch wird die Bedienungsperson bei einer Manövrierbewegung entlastet bzw. unterstützt, bei der sie das Führungsteil nach einem Herausschwenken zurück in die Neutralposition bewegt.

Ferner kann erfindungsgemäß vorgesehen sein, dass die Gelenkanordnung ein Verbindungselement aufweist, das das erste Schwenkgelenk mit dem zweiten Schwenkgelenk verbindet, wobei das Verbindungselement gegenüber der Bodeneinheit um die zweite Schwenkachse verschwenkbar ist und das Führungsteil gegenüber dem Verbindungselement um die erste Schwenkachse verschwenkbar ist. Dadurch lässt sich eine Art doppelkardanische Gelenkanordnung erreichen.

Vorteilhafterweise ist in diesem Zusammenhang vorgesehen, dass das Verbindungselement gegenüber der Bodeneinheit abstützbar ist. Die Abstützeinrichtung zur Abstützung in der ersten Schwenkachsenebene wird also mit dem Verbindungselement gekoppelt, um so - auch im Falle einer wirksamen Abstützung - weiterhin eine gute Beweglichkeit des Führungsteils um die erste Schwenkachse zu gewährleisten.

Insbesondere ist in diesem Zusammenhang vorgesehen, dass die jeweilige Abstützeinrichtung dem Verbindungselement zugeordnet ist und ein Abstützelement umfasst, das in dem Manövrierbetriebszustand die Bodeneinheit abstützend kontaktiert.

Bei einer bevorzugten Ausführungsvariante der vorliegenden Erfindung kann die jeweilige Abstützeinrichtung integral mit der Gelenkanordnung ausgebildet sein. Dabei ist es möglich, wie vorstehend bereits angedeutet, dass die Gelenkanordnung als Doppel-Kardangelenk ausgebildet ist und die Abstützeinrichtung bzw. zumindest eine der den beiden Schwenkachsen zugeordneten Abstützeinrichtungen integral mit dem Doppel-Kardangelenk ausgebildet ist. Alternativ ist es möglich, die Abstützeinrichtung als separate Baugruppe auszubilden, beispielsweise in Form eines Abstützmoduls, das an der Bodenreinigungsvorrichtung bedarfsweise angebracht oder von dieser entfernt werden kann. Hierzu kann eine Kopplungsschnittstelle bereitgestellt werden, die eine sichere und dennoch lösbare Verbindung zwischen dem Abstützmodul und der Bodenreinigungsvorrichtung vorsieht.

Ferner kann gemäß der vorliegenden Erfindung, wie vorstehend ebenfalls bereits angedeutet, die jeweilige Abstützeinrichtung von einem Bediener bedarfsweise aktivierbar oder deaktivierbar ausgebildet sein. Dies kann durch mechanisches Verlagern, beispielsweise Hin- und Herklappen eines Stützbügels, oder durch elektromagnetisches Zuschalten bzw. Aktivieren der jeweiligen Abstützeinrichtung oder dergleichen geschehen.

Eine Weiterbildung der Erfindung sieht vor, dass die Abstützeinrichtung von einem Bediener zwischen einer Betriebsposition und einer Parkposition verschwenkbar ist, wobei die Abstützeinrichtung vorzugsweise in wenigstens einer von Betriebspositionen Parkposition arretierbar ist. Damit lässt sich die Abstützeinrichtung bedarfsweise zuschalten oder entfernen, wobei sie idealerweise in beiden Positionen verbleibt. Dies kann beispielsweise durch eine Federvorspannung oder eine Verrastungs- oder Arretiervorrichtung erfolgen.

Eine Ausführungsvariante der Erfindung sieht vor, dass der Abstützeinrichtung ein Adhäsionselement, insbesondere ein Magnet, zugeordnet ist, das dazu eingerichtet ist, die Abstützeinrichtung beim Abstützen gegen ein Verschwenken entgegen der Abstützrichtung und/oder quer zur Abstützrichtung bis zum Überschreiten eines Kraftschwellenwerts zu sichern. Mit anderen Worten kann die Abstützeinrichtung in einer abstützenden Betriebsstellung unterstützend festgehalten werden, um ein unerwünschtes Lösen der Stützwirkung zu vermeiden.

Ferner sieht eine Weiterbildung der Erfindung vor, dass die Abstützeinrichtung, vorzugsweise über das Adhäsionselement, eine im wesentlichen formschlüssige oder/und kraftschlüssige Verbindung zwischen der Abstützeinrichtung und dem Führungsteil bzw. der Bodeneinheit bereitstellt. Dadurch kann eine sichere Kopplung von Abstützeinrichtung und Führungsteil bzw. Bodeneinheit während der Abstützung erzielt werden, die ein unbeabsichtigtes Lösen verhindert. Ein zumindest teilweiser Formschluss kann beispielsweise durch vorsehen einer einfachen Ausnehmung oder Mulde bereitgestellt werden, in die die Abstützeinrichtung eingreift.

Hinsichtlich der Ausrichtung der Schwenkachsen kann vorgesehen sein, dass die zweite Schwenkachse im Wesentlichen senkrecht gegenüber der ersten Schwenkachse ausgerichtet ist. Dabei ist es ferner möglich, dass das Führungsteil eine Längsachse umfasst, die bevorzugt senkrecht zu der ersten Schwenkachse und gegebenenfalls senkrecht zu der zweiten Schwenkachse orientiert ist.

Eine vorteilhafte Masseverteilung und Abstützwirkung ergibt sich beispielsweise dann, wenn die Gelenkanordnung an der Bodeneinheit derart anbringbar ist, dass die Gewichtskraft des Führungsteils über die Gelenkanordnung in die Bodeneinheit an einem geometrischen Ort der Bodeneinheit eingeleitet wird, der in Vortriebsrichtung betrachtet vor einem Flächenschwerpunkt oder Masseschwerpunkt der Bodeneinheit liegt ist.

Eine Weiterbildung der Erfindung sieht zur Veränderung der Masseverteilung und damit zur bedarfsgerechten Einstellung der Manövriereigenschaften der erfindungsgemäßen Bodenreinigungsvorrichtung vor, dass die Bodeneinheit eine Befestigungsvorrichtung umfasst, mittels derer die Gelenkanordnung an unterschiedlichen Befestigungspositionen entlang der Vortriebsrichtung an der Bodeneinheit variabel befestigbar ist. Diese Eigenschaft kann beispielsweise dadurch erreicht werden, dass die Befestigungseinrichtung eine Schiene sowie eine Rastvorrichtung umfasst, die jeweils in den vorgegebenen Befestigungspositionen befestigbar ist.

Die Masseverteilung lässt sich aber auch bereits durch Verschwenken des Führungsteils um die zweite Schwenkachse durch eine Bedienungsperson beeinflussen. So kann beispielsweise während des Abstützzustands durch Ziehen des Führungsteils gegen die Abstützwirkung nach hinten die gesamte Bodenreinigungsvorrichtung mehr oder weniger stark nach hinten "verkippt" werden. Diese Maßnahme entlastet unter Vermittlung der Abstützwirkung den vorderen Bereich der Bodenreinigungsvorrichtung, beispielsweise die den Vortrieb erzeugenden Reinigungswerkzeuge oder Antriebsräder, was das Manövrieren erleichtern kann. Das angesprochene "Verkippen" kann im Bereich von wenigen Winkelminuten bzw. wenigen Winkel-° liegen.

Erfindungsgemäß kann vorgesehen sein, dass ein Massenverhältnis zwischen Bodeneinheit und Führungsteil im Bereich von 1:5 bis 1:1, oder 1:1 bis 5:1 ausgebildet ist.

Wie eingangs bereits erläutert, sieht die erfindungsgemäße Bodenreinigungsvorrichtung zumindest optional eine Vortriebswirkung an der Bodeneinheit vor. In diesem Zusammenhang kann vorgesehen sein, dass das zumindest eine Werkzeug dazu eingerichtet ist, in dem Betriebszustand die Bodenfläche zu kontaktieren und zumindest anteilig den Vortrieb zu erzeugen. Die erfindungsgemäße Wirkung wird aber bereits dadurch - zumindest in eingeschränkten Umfang - erreicht, dass die entgegengesetzt zueinander rotierenden Werkzeuge auch ohne Vortriebswirkung die Reibung zwischen der Bodenreinigungsvorrichtung und dem Untergrund stark reduzieren. Wird die Bodenreinigungsvorrichtung dann manuell nach vorne geschoben und gemäß vorstehender Beschreibung das Führungsteil um die erste Schwenkachse verschwenkt, so kann allein durch die Vorwärtsbewegung und die damit verbundene Trägheit der Bodenreinigungsvorrichtung aus dieser Vorwärtsbewegung das eingangs beschriebene begünstigende Rotationsmoment der Bodeneinheit bewirkt werden.

Insbesondere ist es in diesem Zusammenhang gemäß der vorliegenden Erfindung möglich, dass das Werkzeug der Bodeneinheit zumindest eine drehangetriebene Bürste mit einer Rotationsachse umfasst, die in dem Betriebszustand im Wesentlichen parallel zur Bodenfläche ausgerichtet ist.

Eine Ausführungsvariante der Erfindung sieht vor, dass eine erste Bürste eine erste Rotationsachse umfasst, die in dem Betriebszustand gegenüber einer Senkrechten zur Bodenfläche geringfügig geneigt ausgerichtet ist, und dass eine zweite der Bürsten eine zweite Rotationsachse umfasst, die in dem Betriebszustand gegenüber einer senkrechten zur Bodenfläche ebenfalls geringfügig geneigt ausgerichtet ist, wobei die erste und zweite Bürste dazu eingerichtet sind, gegenläufig zu rotieren. Die Rotationsrichtungen können dabei frei wählbar sein.

Hinsichtlich der Neigung der Rotationsachsen zur Senkrechten kann bei einer speziellen Ausführungsform der erfindungsgemäßen Bodenreinigungsvorrichtung vorgesehen sein, dass die erste Rotationsachse und die zweite Rotationsachse um 0,8° bis 5°, bevorzugt um etwa 1,5°, gegenüber der Senkrechten geneigt sind. Die Neigung kann über einen geeigneten Mechanismus von einer Bedienungsperson einstellbar sein.

Zusätzlich oder alternativ zu einer Erzeugung der Vortriebswirkung über die Werkzeuge kann die erfindungsgemäße Bodenreinigungsvorrichtung ferner vorsehen, dass die Bodeneinheit zumindest einen Antriebskörper, beispielsweise in Form eines Rades, einer Tonne oder eines walzenförmigen Zylinders, umfasst, das in dem Betriebszustand die Bodenfläche kontaktiert und das dazu eingerichtet ist, zumindest temporär und/oder zumindest anteilig den Vortrieb zu erzeugen.

Hinsichtlich der Vorteile der Bodenreinigungsvorrichtung gemäß der vorliegenden Erfindung beim Manövrieren wird zum besseren Verständnis folgendes ergänzt:
- Die gegenüber dem Stand der Technik deutlich verbesserte Manövrierbarkeit der erfindungsgemäßen Bodenreinigungsvorrichtung ergibt sich aus der eingangs erläuterten Abstützung des Führungsteils in Kombination mit der Vortriebswirkung und einer etwaigen Manövrierbewegung der Bedienungsperson, insbesondere wenn diese am Führungsteil dezentral leicht gegenhält.
- Wird das Führungsteil um den ersten Schwenkbereich, insbesondere die erste Schwenkachse verschwenkt, so wird die Bodenreinigungsvorrichtung aus einem Zustand des Kräftegleichgewichts heraus bewegt.
- Die von der Bedienungsperson infolgedessen anteilig zu übernehmende Gewichtskraft ist deutlich geringer als bei herkömmlichen Vorrichtungen ohne Abstützung, die eine Verschwenkung des Führungsteils um eine der ersten Schwenkachse entsprechende Achse zulassen.
- Die Bedienungsperson muss daher bei der erfindungsgemäßen Bodenreinigungsvorrichtung während einer solchen Verschwenkung des Führungsteils deutlich weniger Kraft aufwenden, um das Führungsteil zu halten. Sie kann das Führungsteil spielerisch halten und manövrieren.
- Ein geringfügiges Gegenhalten durch die Bedienungsperson am ausgelenkten Führungsteil entgegen der Wirkung der Vortriebskraft sorgt für ein entsprechendes Rotationsmoment in der Bodeneinheit, was durch die Vortriebswirkung unterstützt wird. Besonders stark macht sich dieser Effekt bemerkbar, wenn die Bedienungsperson das Führungsteil sogar entgegen der Vortriebswirkung leicht zurückzieht.
- Je stärker das Führungsteil um den ersten Schwenkbereich in der einen oder anderen Richtung verschwenkt wird, desto größer ist dieser Effekt infolge des Gegenhaltens bzw. Zurückziehens.
- Bereits kleine Schwenkbewegungen lassen sich unter Ausnutzung der Abstützung vorteilhaft beim Manövrieren nutzen.
- Das Manövrieren kann dadurch weiter erleichtert werden, indem das Führungsteil vom Benutzer zusätzlich zum oben genannten Gegenhalten oder Zurückziehen auch noch leicht gegen die Wirkung der Abstützung nach unten zur Bodenfläche gedrückt wird. Dadurch verstärkt sich das Rotationsmoment in der Bodeneinheit, zum einen durch Veränderung der Kraftverteilung in der Bodeneinheit, zum anderen unter Ausnutzung der Vortriebswirkung.

All diese Maßnahmen während des Manövrierens sind relativ kleine Eingriffe durch den Benutzer, die nur einen sehr geringen Kraftaufwand erfordern.

Vorzugsweise weist die erfindungsgemäße Bodenreinigungsvorrichtung ferner eine Saugeinheit auf, die dazu eingerichtet ist, Partikel und/oder Flüssigkeit oder allgemein Schmutzwasser von der Bodenfläche aufzusaugen. In diesem Zusammenhang ist es möglich, dass die Saugeinheit zumindest eine Saugturbine umfasst, die an der Bodeneinheit oder an dem Führungsteil angeordnet oder separat von diesen ausgebildet ist und dazu eingerichtet ist, einen Unterdruck zu erzeugen. Die Saugwirkung kann durch eine an der dem Benutzer zugewandten Rückseite der Bodenreinigungsvorrichtung angeordnete lineare oder gerundete Saugleiste unterstützt oder verstärkt werden. Diese Saugleiste kann eine oder mehrere Dichtlippen aufweisen. Saugleiste und/oder Dichtlippen können für eine Reibungskraft relativ zur Bodenfläche sorgen, die vorteilhaft bei der Aufnahme von über das Führungsteil in die Bodeneinheit eingeleiteten Querkräften sein kann. Die Aufnahme von Querkräften kann auch über Führungs- oder Antriebsräder erfolgen.

Es ist aber gleichermaßen erfindungsgemäß möglich, Schmutzwasser auch anderweitig aufzunehmen, beispielsweise über ein Vlies, einen kapillaren Absorptionsmechanismus oder über eine rotierende Walze oder dergleichen, die das Schmutzwasser aufnimmt und in einen Sammelbehälter fördert.

Ferner kann der erfindungsgemäße Bodenreinigungsvorrichtung zumindest einen Auffangbehälter umfassen, der dazu eingerichtet ist, die aufgesaugten Partikel und/oder die zur Reinigung benutzte Flüssigkeit aufzufangen, wobei der Auffangbehälter insbesondere lösbar an dem Führungsteil oder der Bodeneinheit angeordnet ist.

Darüber hinaus kann die erfindungsgemäße Bodenreinigungsvorrichtung einen Reinigungsmittelbehälter umfassen, der dazu eingerichtet ist, ein Reinigungsmittel bevorzugt über eine Zuführvorrichtung dem zumindest einen Werkzeug bereitzustellen, wobei der Reinigungsmittelbehälter an der Bodeneinheit oder an dem Führungsteil angeordnet ist.

Darüber hinaus kann die erfindungsgemäße Bodenreinigungsvorrichtung einen Reinwasserbehälter umfassen, der dazu eingerichtet ist, ein Reinwasser bevorzugt über eine Zuführvorrichtung dem zumindest einen Werkzeug bereitzustellen, wobei der Reinwasserbehälter an der Bodeneinheit oder an dem Führungsteil angeordnet ist.

Der Auffangbehälter, der Reinigungsmittelbehälter und der Reinwasserbehälter können gruppenweise oder insgesamt integral ausgebildet sein.

Gemäß einer bevorzugten Weiterentwicklung der erfindungsgemäßen Bodenreinigungsvorrichtung kann diese in einen Parkzustand gebracht werden, wobei in dem Parkzustand die Bodeneinheit relativ zu dem Führungsteil in eine raumsparende Parkposition verlagerbar und in dieser arretierbar ist.

Eine Weiterbildung der Erfindung sieht vor, dass die Abstützeinrichtung dazu ausgebildet ist, das Führungsteil vollständig gegenüber der Bodeneinheit zu verriegeln, sodass eine Verschwenkung um die erste Schwenkachse und gegebenenfalls um die zweite Schwenkachse zumindest in einem vorbestimmten Winkelbereich blockiert ist. Gemäß dieser Erfindungsvariante ist es also möglich, das Führungsteil relativ zur Bodeneinheit so festzulegen, dass keinerlei Relativbewegung bzw. Verschwenkung der beiden Komponenten zueinander möglich ist. Eine derartige vollständige Verriegelung bzw. Festlegung von Führungsteil und Bodeneinheit zueinander kann in einer Weiterbildung dieses Erfindungsgedankens bedarfsweise zuschaltbar und wieder entfernbar sein. Dies kann beispielsweise dadurch erreicht werden, dass die Abstützeinrichtung, wie vorstehend ausführlich beschrieben, um eine Schwenkachse in eine aktive Stellung und in eine passive Stellung verschwenkbar ist, wobei die Abstützeinrichtung in der aktiven Stellung die vollständige Blockierung des Führungsteils relativ zur Bodeneinheit vorsieht. Dabei kann die Abstützeinrichtung das Führungsteil am Bodenteil abstützen, und zwar unabhängig von der Gelenkanordnung. Die Abstützung kann aber auch in der Gelenkanordnung integriert oder in unmittelbarer Nähe zur Gelenkanordnung angeordnet sein. Besonders bietet sich eine derartige Abstützung bei einer Ausbildung der Gelenkanordnung als kardanisches Doppelgelenk oder anderweitiges Doppelgelenk an. Vorzugsweise findet die vollständige Blockierung des Führungsteils relativ zur Bodeneinheit dann Anwendung, wenn das Führungsteil relativ zur Vertikalachse etwas geneigt ist, beispielsweise um 15-45°. So ist es möglich, dass das Führungsteil in einer bestimmten Winkelstellung vollständig blockiert wird, sodass es nicht weiter relativ zur Vertikalachse ausgelenkt bzw. verschwenkt werden kann, bei einem Zurückschwenken in Richtung der Vertikalachse aber beweglich bleibt.

Die Erfindung betrifft ferner eine Abstützeinrichtung der vorstehend beschriebenen Art. Diese umfasst eine Basis, mit der sie entweder an dem Schaft oder an der Bodeneinheit anbringbar ist. Die Anbringung kann in fest vorgegebenen Positionen oder variabel erfolgen. Ferner umfasst die Abstützeinrichtung wenigstens eine Stützstrebe, die dauerhaft oder durch Verlagern in eine Stützstellung die Gewichtskraft des Schaftes in die Bodeneinheit einleitet. Die Stützstrebe kann beispielsweise zwischen einer Stützstellung und einer Parkstellung hin und her geklappt werden. Zum Fixieren kann ein Arretiermechanismus oder ein Magnet vorgesehen sein. Mit der Abstützeinrichtung ist es möglich, wie vorstehend beschrieben, in einem Manövrierbetriebszustand die Gewichtskraft des Führungsteils auf der Bodeneinheit abzustützen, wobei das Führungsteil weiterhin manövrierbar, d. h. um die erste Schwenkachse schwenkbar bleibt. Ferner kann die Abstützeinrichtung einen Sperrbügel umfassen, der zuschaltbar ein Verschwenken des Führungsteils um die erste Schwenkachse sperrt. Der Sperrbügel kann so eingerichtet sein, dass er jegliches Verschwenken des Führungsteils um die erste Schwenkachse blockiert oder ein Verschwenken erst ab einem vorbestimmten Schwenkwinkel sperrt.

Schließlich sei angemerkt, dass die Abstützeinrichtung auch als Nachrüstbausatz, d. h. als separate Baugruppe bereitgestellt werden kann, die bei Bedarf an eine entsprechende Bodenreinigungsvorrichtung zum Erzielen der vorstehend geschilderten Vorteile anbringbar aber auch wieder entfernbar weist.

Ausführungsformen der Erfindung werden im Folgenden beispielhaft anhand der folgenden Figuren beschrieben. Es stellen dar:
- Fig. 1: eine räumliche Darstellung eines ersten Ausführungsbeispiels der erfindungsgemäßen Bodenreinigungsvorrichtung mit aktivierter bügelartig ausgebildeter Abstützeinrichtung;
- Fig. 2: eine räumliche Darstellung des ersten Ausführungsbeispiels der erfindungsgemäßen Bodenreinigungsvorrichtung aus anderem Betrachtungswinkel;
- Fig. 3: eine räumliche Detaildarstellung der Bodeneinheit und eines Teils der Gelenkanordnung des ersten Ausführungsbeispiels der erfindungsgemäßen Bodenreinigungsvorrichtung;
- Fig. 4: eine räumliche Detaildarstellung der Bodeneinheit und eines Teils der Gelenkanordnung des ersten Ausführungsbeispiels der erfindungsgemäßen Bodenreinigungsvorrichtung gemäß Fig. 3 aus anderem Betrachtungswinkel;
- Fig. 5: eine räumliche Detaildarstellung der Abstützeinrichtung des ersten Ausführungsbeispiels der erfindungsgemäßen Bodenreinigungsvorrichtung;
- Fig. 6: eine räumliche Detaildarstellung der Abstützeinrichtung gemäß Figur 5 aus anderem Betrachtungswinkel;
- Fig. 7: eine räumliche Detaildarstellung der Bodeneinheit und eines Teils des Führungsteils des ersten Ausführungsbeispiels der erfindungsgemäßen Bodenreinigungsvorrichtung mit der Abstützeinrichtung;
- Fig. 8: eine räumliche Detaildarstellung der Bodeneinheit und eines Teils des Führungsteils entsprechend Fig. 7, jedoch mit der Abstützeinrichtung gezeigt in einem eine seitliche Verschwenkung des Führungsteils um die erste Schwenkachse blockierenden Zustand;
- Fig. 9: eine Detaildarstellung der Bodeneinheit zur Erläuterung der Neigung des Werkzeugs; und
- Fig. 10: eine Darstellung zur Erläuterung der Kraftverteilung von dem Führungsteil auf die Bodeneinheit unter Vermittlung der Gelenkanordnung und der Abstützeinrichtung;
- Fig. 11a - 11c: räumliche Detaildarstellungen zur allgemeinen Erläuterung des Manövrierverhaltens der erfindungsgemäßen Bodenreinigungsvorrichtung;
- Fig. 12a, 12b: räumliche Darstellungen zur Erläuterung eines Manövriervorgangs mit der erfindungsgemäßen Bodenreinigungsvorrichtung, bei der die Bedienungsanordnung nur einseitig an einem Handgriff belastet wird;
- Fig. 13a, 13b: räumliche Darstellungen zur Erläuterung eines Manövriervorgangs mit der erfindungsgemäßen Bodenreinigungsvorrichtung, bei der diese entlang einer Wand mit hinreichendem Abstand der Bedienungsperson von der Wandbewegt wird;
- Fig. 14a - 14c: räumliche Detaildarstellungen zur Erläuterung der Parkstellung der erfindungsgemäßen Bodenreinigungsvorrichtung;
- Fig. 15: eine räumliche Darstellung eines zweiten Ausführungsbeispiels der erfindungsgemäßen Bodenreinigungsvorrichtung mit federartig ausgebildeter Abstützeinrichtung;
- Fig. 16: eine räumliche Darstellung eines dritten Ausführungsbeispiels der erfindungsgemäßen Bodenreinigungsvorrichtung mit einer klappbaren, sich bei Bedarf am Boden abstützenden Abstützeinrichtung;
- Fig. 17 und 18: räumliche Teildarstellungen eines dritten Ausführungsbeispiels der erfindungsgemäßen Bodenreinigungsvorrichtung mit einer Abstützeinrichtung, die ein geführtes seitliches Verschwenken des Führungsteils ermöglicht;
- Fig. 19a und 19b: Einzelteildarstellungen des Grundkörpers der Abstützeinrichtung gemäß Figuren 17 und 18;
- Fig. 20 und 21: räumliche Teildarstellungen des dritten Ausführungsbeispiels hinsichtlich verschiedener Betriebspositionen bzw. Parkpositionen der Abstützeinrichtung; und
- Fig. 22a bis 22c: räumliche Darstellungen eines separaten Abstützmoduls gemäß dem dritten Ausführungsbeispiel der erfindungsgemäßen Bodenreinigungsvorrichtung.

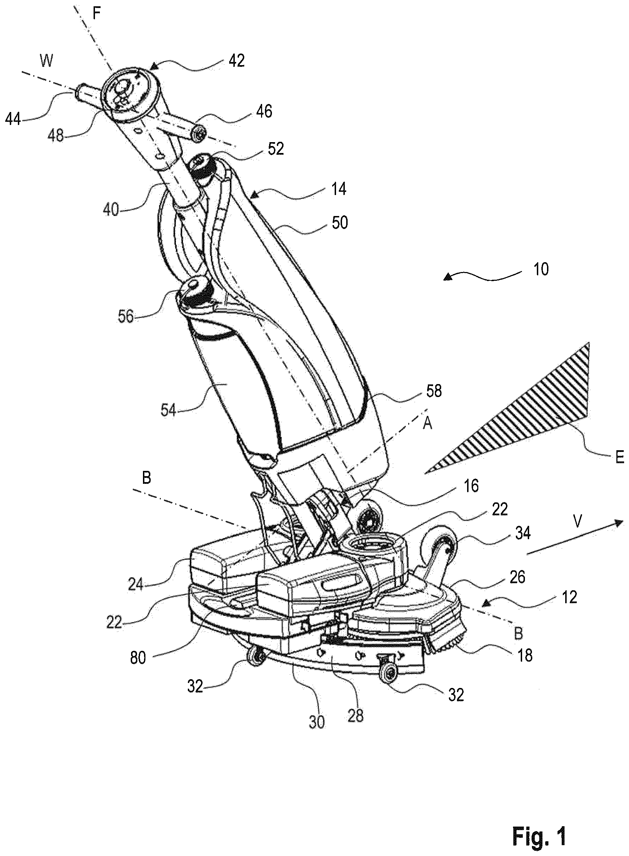

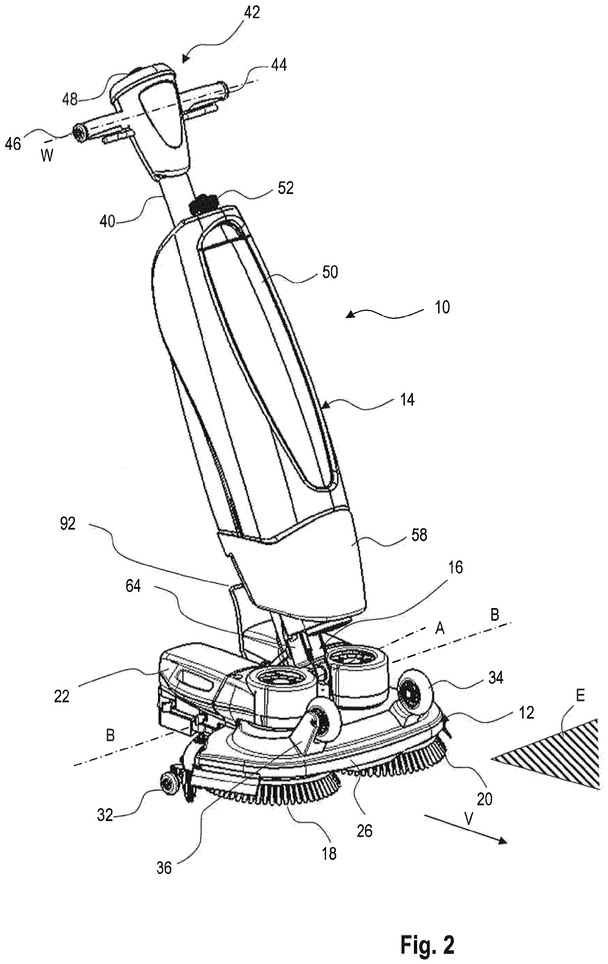

In Fig. 1 und 2 sind räumliche Darstellungen aus unterschiedlicher Betrachtungsperspektive eines ersten Ausführungsbeispiels einer erfindungsgemäßen Bodenreinigungsvorrichtung gezeigt, die allgemein mit 10 bezeichnet ist. Diese umfasst eine Bodeneinheit 12 und ein Führungsteil 14, die über eine Gelenkanordnung 16 gelenkig miteinander verbunden sind.

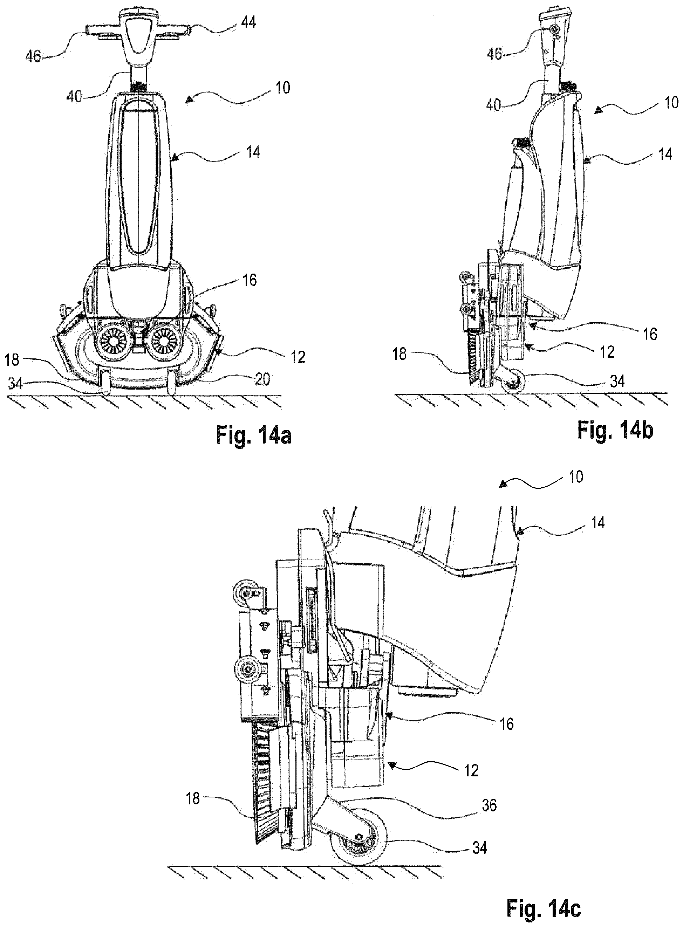

Der Bodeneinheit sind zwei bürstenartige Werkzeuge 18, 20 zugeordnet, die rotatorisch angetrieben werden können. Hierzu ist dem Werkzeug 18 eine Antriebsanordnung 22 und dem Werkzeug 20 eine Antriebsanordnung 24 zugeordnet. Die Bodeneinheit 12 umfasst ein plattenartiges Gehäuse 26, an dem die beiden Antriebsanordnungen 22, 24 angebracht sind, wobei zwischen diesen ein freier Zwischenraum vorgesehen ist. Die Werkzeuge 18, 20 sind an der Unterseite des Gehäuses 26 gelagert. An dem Gehäuse 26 ist rückseitig, wie man in Figur 1 erkennen kann, eine Saugleiste 28 angebracht, an deren Unterseite eine Dichtlippenanordnung 30 vorgesehen ist, die vorzugsweise aus gummiartigem Material gebildet ist. Diese kann eine einzige oder mehrere Dichtlippen umfassen. An der Saugleiste 28 sind rückseitig insgesamt drei Stützrollen 32 vorgesehen, von denen eine in den Darstellungen verdeckt ist. Die Bodeneinheit 12 weist ferner an ihrer Frontseite zwei schräg nach oben stehende Transportrollen 34 auf, die in Lagervorsprüngen 36 gelagert sind. Diese Transportrollen 34 dienen zur einfacheren Handhabung der erfindungsgemäßen Bodenreinigungsvorrichtung 10 in einer Lagerstellung, worauf nachfolgend im Detail noch mit Bezug auf die Figuren 14a bis 14c eingegangen wird.

Das Führungsteil 14 weist einen länglichen Schaft 40 auf, an dessen oberen Ende eine Bedienungsanordnung 42 angebracht ist. Diese Bedienungsanordnung 42 umfasst zwei Handgriffe 44, 46 mit zugeordneten Bedienungshebeln sowie ein zentrales Bedienungsfeld 48, an dem ein Display oder/und Anzeigefelder zur Darstellung des aktuellen Betriebszustandes sowie von Betriebsparametern vorgesehen ist, wie etwa der aktuelle Ladezustand, die aktuelle Drehzahlen der Werkzeuge 18, 20, Füllstände für verschiedene Flüssigkeiten, wie zum Beispiel Reinwasser, Schmutzwasser, Reinigungsflüssigkeit, verbleibende Betriebsdauer und ähnliche Informationen. Ferner umfasst das zentrale Bedienungsfeld 48 Einstellungsinstrumente, zum Anschalten und Steuern verschiedener Betriebsparameter der Bodenreinigungsvorrichtung 10, wie etwa der Drehzahl der Werkzeuge 18, 20, o. ä.

An dem Schaft 40 sind ferner ein Reinwasserbehälter 50 mit Füllstutzen 52 sowie ein Schmutzwasserbehälter 54 mit Entleerungsstutzen 56 vorgesehen. Der Reinwasserbehälter 50 kann auch mit einem Gemisch aus Wasser und Reinigungsflüssigkeit gefüllt sein. Alternativ kann ein separater Behälter für Reinigungsflüssigkeit vorgesehen sein, der in den Figuren nicht gezeigt ist. Unterhalb der Flüssigkeitsbehälter 50, 54 ist in einem gesonderten Gehäusebereich 58 in nicht näher dargestellter Weise Komponenten zur Zuführung von Reinwasser und Reinigungsflüssigkeit zur Bodeneinheit 12 sowie eine Saugeinheit, insbesondere mit einer Saugturbine, zum Einsaugen von auf den Boden aufgebrachten und Schmutz aufnehmenden Wasser mit Reinigungsflüssigkeit vorgesehen.

Die Neigung des Führungsteils 14 relativ zur Bodeneinheit 12 wird im folgenden anhand der Neigung der Führungsteillängsachse F erläutert, die sich senkrecht zur ersten Schwenkachse A erstreckt und durch eine Wirklinie W verläuft, die durch die Mittelachse der beiden Handgriffe 44, 46 vorgegeben ist. Zusammen mit der ersten Schwenkachse A spannt die Führungsteillängsachse eine Neigungsebene des Führungsteils 14 relativ zur Bodenfläche auf.

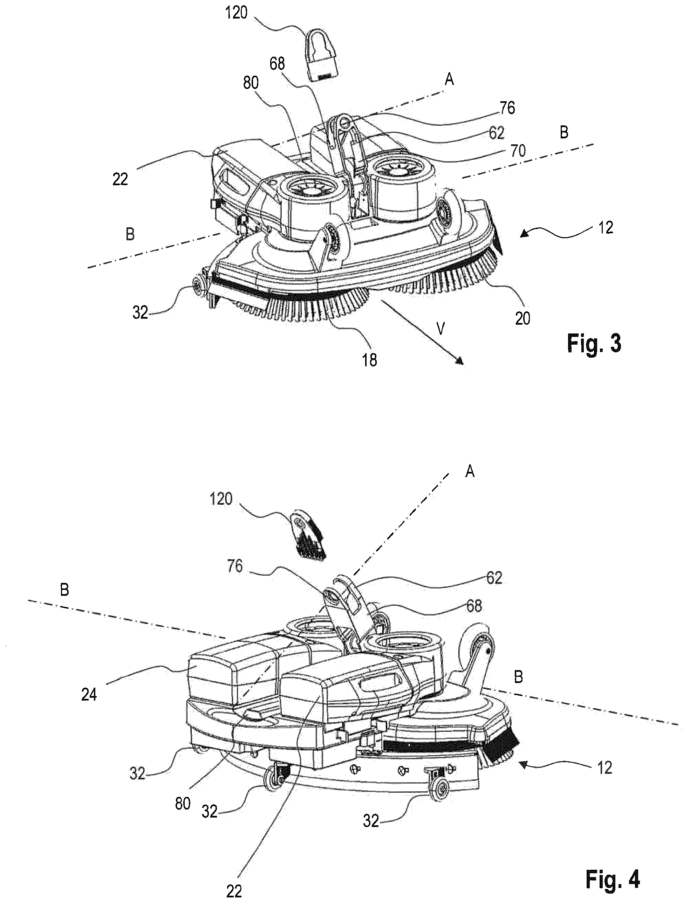

Die Gelenkanordnung 16, die die Bodeneinheit 12 mit dem Führungsteil 14 verbindet wird, im folgenden mit Bezug auf Figuren 3 und 4 detaillierter beschrieben. Diese umfasst im gezeigten Ausführungsbeispiel ein an der Bodeneinheit angebrachtes erstes Lagerteil 60, ein mit diesem gekoppeltes Gelenkelement 62 sowie ein an der Unterseite des Schaftes 40 des Führungsteils 14 angebrachtes zweites Lagerteil 64.

Die Gelenkanordnung 16 ist derart ausgebildet, dass das zweite Lagerteil 64 relativ zu dem Gelenkelement 62 um eine erste Schwenkachse A verschwenkbar ist. Die erste Schwenkachse A verläuft in der Stellung gemäß den Figuren 1-4, die etwa einer Betriebsstellung entspricht, in der die erfindungsgemäße Bodenreinigungsvorrichtung 10 zur Reinigung eines Bodens manövriert wird, im folgenden auch Manövrierbetriebszustand genannt, in Richtung schräg nach vorne. Sie liegt in einer Ebene, einer sogenannten erste Schwenkachsenebene zusammen mit einer Vortriebsrichtung V parallel zum Boden die im wesentlichen auf einer Symmetrielinie zwischen den beiden Werkzeugen 18 und 20 senkrecht zur Bodenfläche verläuft. Ferner umfasst die Gelenkanordnung 16 eine zweite Schwenkachse B die orthogonal zur erste Schwenkachse A verläuft. Die Gelenkanordnung 16 mit ihrem Gelenkelement 62 verbindet die Bodeneinheit 12 mit dem Führungsteil 14 demnach in doppelkardanischer Weise.

Im einzelnen umfasst das Gelenkelement 62 in seinem unteren Bereich zur Kopplung mit dem ersten Lagerteil 60, das an der Bodeneinheit 12 angebracht ist, eine Gabelform mit zwei Streben 68, 70, die rückseitig über ein Verstärkungselement 72 miteinander verbunden sind. Durch die beiden Streben 68, 70 erstreckt sich ein Lagerbolzen 74, der das Gelenkelement 62 um die Schwenkachse B verschwenkbar an dem erste Lagerteil 60 lagert. An seinem oberen Ende umfasst das Gelenkelement 62 ein in einem konisch zulaufenden Abschnitt ausgebildetes Lagerauge 76, dass die erste Schwenkachse A definiert. Über dieses Lagerauge 76 und einen zugehörigen Lagerbolzen ist das Gelenkelement 62 mit dem zweiten Lagerteil 64 am unteren Ende des Schaftes 40 des Führungsteils 14 um die erste Schwenkachse A verschwenkbar verbunden.

Das erste Lagerteil 60 lässt sich auf der Bodeneinheit 12 entlang einer Führungsschiene 80 verlagern und in beliebigen Positionen entlang dieser Führungsschiene 80 arretieren. Dies erfolgt über einen Klemmmechanismus, der zum Verschieben gelöst und zum Fixieren in eine Klemmstellung gebracht werden kann. Alternativ ist es möglich, vorgegebene Arretierpositionen vorzusehen, in denen das erste Lagerteil beispielsweise durch Einstecken in vorbestimmte Arretier- oder Rastöffnungen festgelegt werden kann. Durch diese Verstellmöglichkeit kann der mechanische Angriffspunkt des Führungsteils an der Bodeneinheit in gewünschter Weise verändert und festgelegt werden, wodurch Einfluss auf die Manövriereigenschaften der erfindungsgemäßen Bodenreinigungsvorrichtung 10 genommen werden kann. Hierauf wird im folgenden noch im Detail eingegangen.

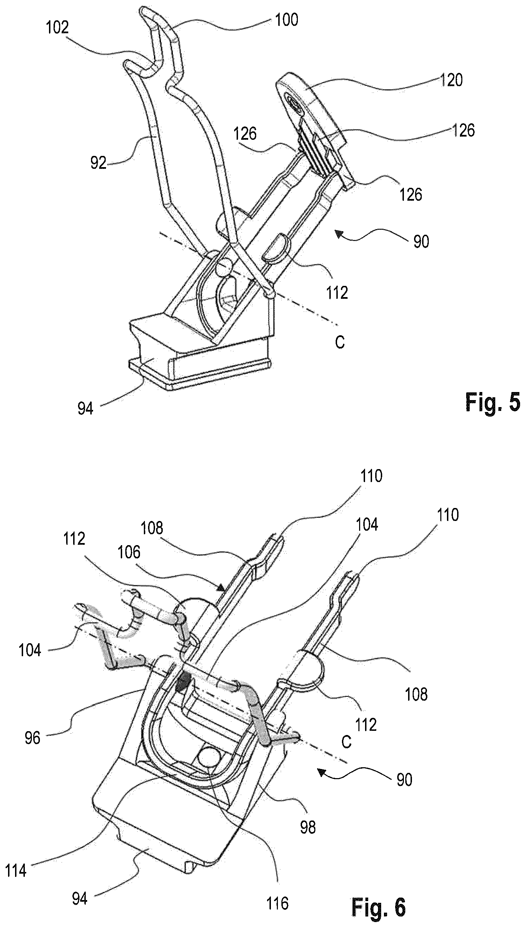

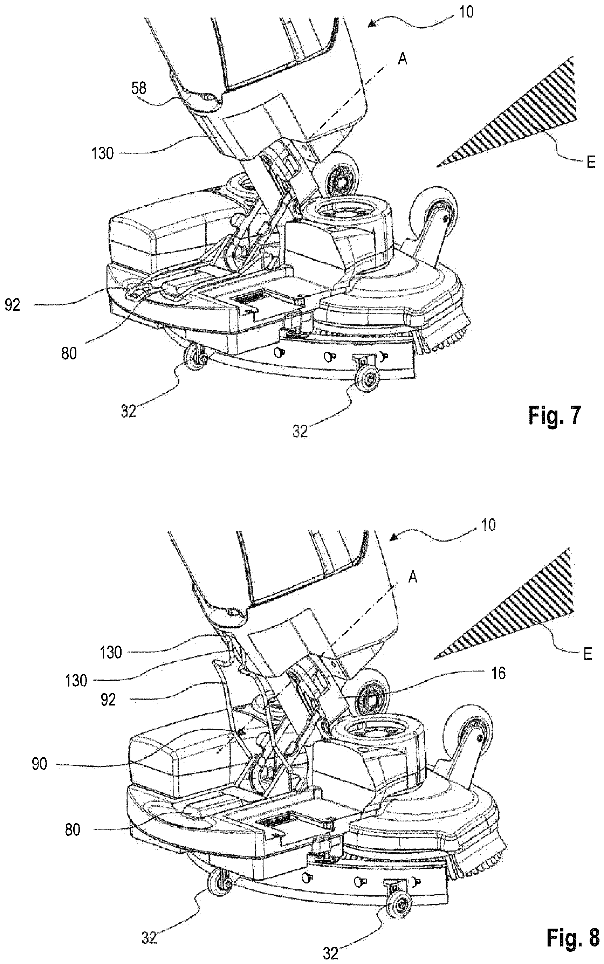

Wie man den Figuren 1 und 2 entnehmen kann, ist zwischen den beiden Antriebsanordnungen 22 und 24 im hinteren Bereich ein Freiraum vorgesehen. Dieser dient einerseits dazu, hinreichend Platz dafür zu schaffen, dass das Führungsteil 14 entlang der Schiene 80 in gewünschter Weise verlagert arretiert werden kann, ohne mit den Antriebsanordnungen 22, 24 zu kollidieren. Andererseits ist in diesem Freiraum eine Abstützeinrichtung 90 vorgesehen, von der in den Figuren 1 und 2 im wesentlichen ein verstellbarer Sperrbügel 92 erkennbar ist. Die Abstützeinrichtung 90 ist im Detail in den Figuren 5 und 6 gezeigt und deren Funktionsweise wird insbesondere mit Bezug auf die Detaildarstellungen gemäß Figuren 7 und 8 im folgenden erläutert.

Die Abstützeinrichtung 90 umfasst eine Basis 94, mit der diese an dem plattenförmigen Gehäuse 26 der Bodeneinheit 12 gelagert ist. Auch die Basis 94 lässt sich entlang der Schiene 80 in gewünschter Weise verlagern. Die Basis 94 weist zwei seitliche Lagerbacken 96, 98 auf, die sich von der Basis 94 aus nach oben erstrecken. In den Lagerbacken 96, 98 ist zum einen der vorstehend bereits angesprochene Sperrbügel 92 verschwenkbar aufgenommen, wobei zwei aufeinander zu gerichtete freie Enden des Sperrbügels 92 jeweils als lagernde Bolzenabschnitte dienen. Der Sperrbügel 92 erstreckt sich ausgehend von den Lagerbacken 96, 98 in mehrfach abgewinkelter bzw. gekrümmter Gestalt hin zu einem abgewinkelt U-förmigen Bereich 100, wobei dieser abgewinkelt U-förmigen Bereich 100 über zwei Stützabschnitte 102 mit den sich von dort ausgehend erweiternden Bügelabschnitten 104 verbunden ist. Es versteht sich, dass der Sperrbügel 92 auch anderweitig ausgebildet sein kann.

Auf der Innenseite der beiden Lagerbacken 96, 98 ist eine Aufnahmegabel 106 angebracht, die ebenfalls innerhalb der Lagerbacken 96, 98 verschwenkbar ist. Die Aufnahmegabel 106 ist U-förmig ausgebildet und weist zwei von der Basis 94 weg nach schräg oben weisende Längsschenkel 108 mit abgerundeten freien Enden 110 auf, die leicht nach innen versetzt sind. An den beiden Schenkeln 108 sind zusätzlich seitlich vorspringende Anlagezungen 112 vorgesehen. Der Querschenkel 114 ist relativ massiv ausgebildet und dient zur stützenden Anlage an der Basis 94.

Zwischen den beiden Lagerbacken 96,98 ist in der Basis 94 ein Haltemagnet 116 vorgesehen.

Ferner erkennt man in Figur 5, aber auch in den vorangehen beschriebenen Figuren 3 und 4, ein Fixierelement 120, das zur Fixierung an dem Gelenkelement 62 vorgesehen ist und eine mit dem Lagerauge 76 in Flucht bringbare Lageröffnung 122 aufweist. Das Fixierelement 120 ist an die Geometrie des oberen Abschnitts des Gelenkelements 62 angepasst, weist plattenförmige Gestalt mit stabilisierenden Verstärkungsrippen 124 auf und ist an seinem in Figur 5 unteren Bereich mit Aufnahmeöffnungen 126 versehen, in die die abgerundeten Enden 110 der Schenkel 108 eindringen und stützend aufgenommen werden können.

Sowohl der Sperrbügel 92 als auch die Führungsgabel 106 sind um eine dritte Schwenkachse C relativ zu der Basis verschwenkbar. Die dritte Schwenkachse C verläuft im wesentlichen parallel zur zweiten Schwenkachse B.

Auf die Funktionsweise der Abstützeinrichtung 90 wird im folgenden eingegangen. Figur 7 zeigt die Abstützeinrichtung 90 in einem Zustand, in dem der Sperrbügel 92 nach hinten unten geklappt ist, sodass der Sperrbügel 92 auf dem Gehäuse 26 der Bodeneinheit 12 in den Zwischenraum zwischen den beiden Antriebsanordnungen 22, 24 in einer passiven Stellung ruht. In dieser Stellung der Abstützeinrichtung 90 stützt sich die gesamte Gewichtskraft des Führungsteils 14 auf der Bodeneinheit 12 ab, und zwar allein über die Wirkung der Abstützeinrichtung 90 mit der Aufnahmegabei 106 und sowie über die Verbindung durch die Gelenkanordnung 16. Eine Bedienungsperson muss also nicht länger das Gewicht des Führungsteils ganz oder anteilig übernehmen. Die Bodenreinigungsvorrichtung 10 bleibt in diesem Zustand - solange das Führungsteil 14 nicht seitlich verkippt wird - völlig stabil alleine ohne Halteunterstützung durch den Benutzer stehen. Beim seitlichen Verschwenken des Führungsteils 14 muss die Bedienungsperson die Gewichtskraft des Führungsteils teilweise abstützen.

Dabei kann als optionales Zusatzmerkmal vorgesehen sein, dass auch die Basis 94 relativ zur Gelenkanordnung 16 entlang der Schiene 80 in verschiedene Abstände und Relativpositionen gebracht und dort fixiert werden kann. Dies macht es möglich, dass die Aufnahmegabel 106 in unterschiedliche Schwenkpositionen relativ zu den Lagerbacken 96,98 gebracht werden kann und damit auch das Führungsteil 14 in unterschiedlichen Winkelstellungen relativ zu der Bodeneinheit 12 abstützen kann. Daraus ergeben sich auch unterschiedliche Ausrichtungen der ersten Schwenkachse A im Hinblick auf ihre Neigung relativ zu einer Bodenfläche.

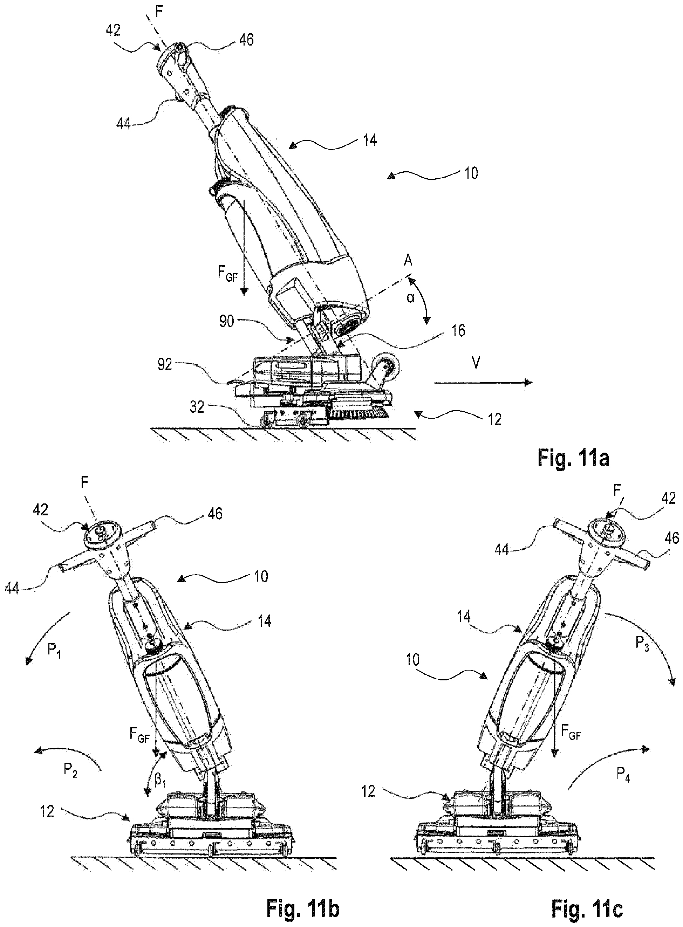

Wichtig ist aber auch, dass die Abstützeinrichtung in der in Figur 7 gezeigten Stellung ein Verschwenken des Führungsteils um die erste Schwenkachse A weiterhin ungehindert zulässt. Obgleich in dem in Figur 7 gezeigten Zustand, in dem das Führungsteil 14 neutral steht, d. h. weder nach links noch nach rechts um die Schwenkachse A geschwenkt ist, die gesamte Gewichtskraft des Führungsteils 14 über die Abstützeinrichtung 90 und die Gelenkanordnung 16 auf die Bodeneinheit 12 abgeleitet wird, sodass der Benutzer das Führungsteil 14 selbst nicht halten muss, in der gezeigten Ausführungsform auch nicht anteilig, kann er die Bodenreinigungsvorrichtung 10 durch aktives Verschwenken des Führungsteils um die Schwenkachse A unter geringem Kraftaufwand nach links oder nach rechts manövrieren, wobei er allerdings das Gewicht des Führungsteils 14 - je nach Grad der Verschwenkung - teilweise halten muss. Durch das Verschwenken in Kombination mit der Abstützung werden die Manövriereigenschaften erheblich verbessert, wie nachfolgend mit Bezug auf Figuren 11a bis 11c erläutert werden wird.

Die Abstützeinrichtung 90 hat aber die weitere Funktion, dass sie in der in Figur 8 gezeigten Stellung die Bodenreinigungsvorrichtung 10 zusätzlich gegen ein Verschwenken um die Schwenkachse A sperren kann.

Figur 8 zeigt die Abstützeinrichtung 90 in einem Zustand, in dem der Sperrbügel 92 nach oben geklappt ist, sodass der U-förmige Bereich 100 in einer Gehäuseaussparung 130 in dem unteren Gehäuseabschnitt 58 des Führungsteils 14 aufgenommen ist. In dieser Stellung wird durch die im wesentlichen formschlüssige Aufnahme des U-förmigen Bereichs 100 des Sperrbügels 92 in der Gehäuseaussparung 130 des Führungsteils 14 verhindert, dass das Führungsteil 14 um die Schwenkachse A verschwenkt werden kann. Der in seiner Stellung verschwenkbare Sperrbügel 92 schafft demnach eine Art zuschaltbare Sperrfunktion. Diese Sperrfunktion ermöglicht es, dass die Bodenreinigungsvorrichtung 10 vorübergehend sicher abgestellt werden kann, ohne dass der Benutzer irgendwelche Komponenten halten oder stabilisieren müsste.

Ferner sei angemerkt, dass die in Figuren 5 und 6 gezeigte Abstützeinrichtung 90 als separates Bauteil auch zu Nachrüstungszwecken bereitgestellt und eingesetzt werden kann. So ist es möglich, ein derartiges Bauteil an bereits bekannten Reinigungsvorrichtungen nachträglich anzubringen, die allesamt unter dem Problem leiden, dass die Bedienungsperson während des Betriebs zumindest einen Teil der Gewichtskraft des Führungsteils beim Manövrieren übernehmen und tragen muss, was auf Dauer anstrengend und ermüdend ist. Eine derart nachrüstbare Abstützeinrichtung kann allein mit der Aufnahmegabel 106 bzw. einer entsprechend ausgebildeten Vorrichtung zur Aufnahme der Gewichtskraft des Führungsteils 14 ausgebildet sein oder zusätzlich auch noch mit dem verschwenkbaren Sperrbügel 92 versehen sein.

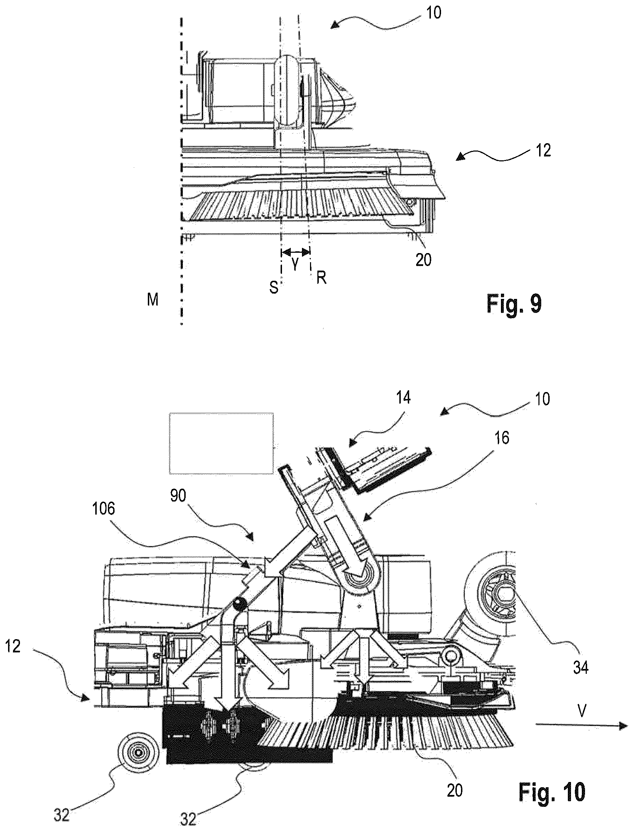

Fig. 9 zeigt, dass das Werkzeug 20 bei Betrachtung der Bodeneinheit 12 von vorne um eine Rotationsachse R drehbar ist, wobei diese Rotationsachse R relativ zu einer Senkrechten S um einen Neigungswinkel γ nach innen geneigt ist. Gleichermaßen, jedoch gespiegelt um eine Mittelachse M, ist das Werkzeug 18 (in Figur 9 nicht gezeigt) nach innen geneigt. Bei gegenläufigem Antrieb der beiden Werkzeuge 18 und 20 um die jeweiligen Rotationsachsen R wird eine Vortriebswirkung in Richtung der Vortriebsrichtung V erzielt.

Fig. 10 zeigt anhand der Pfeile, dass die Gewichtskraft des Führungsteils 14 nicht nur über die Gelenkanordnung 16 sondern gleichermaßen auch über die Abstützeinrichtung 90 und dort insbesondere über die Aufnahmegabel 106 in die Bodeneinheit 12 eingeleitet wird, sobald die Abstützeinrichtung 90 wirksam ist. Aufgrund der gleichmäßigeren Verteilung der Gewichtskraft des Führungsteils 14 nehmen die hinteren Rollen 32 etwas mehr Kraft auf und übernehmen eine etwas größere Abstützwirkung. Dadurch werden die bürstenartigen Werkzeuge 18, 20 etwas entlastet, womit deren Lebensdauer verlängert werden kann. Ist dieser Effekt der Bürstenentlastung nicht erwünscht, so kann in einer Ausgestaltung der vorliegenden Erfindung vorgesehen sein, die Gelenkanordnung an der Bodeneinheit eher weiter vorne in Vortriebsrichtung anzuordnen. Die Abstützeinrichtung kann dann weiter hinten entgegen der Vortriebsrichtung angeordnet werden. Dadurch lässt sich eine gleichmäßigere bzw. zentralere Verteilung der Gewichtskraft der Führungseinheit auf das Bodenteil erreichen. Daneben stellen sich die vorangehend und nachfolgend noch im Detail erläuterten Vorteile hinsichtlich des Manövrierens und der Bedienungsfreundlichkeit ein.

Figuren 11a bis 11c zeigen verschiedene Manövrierzustände, bei denen die vorstehend geschilderte Abstützeinrichtung 90 in besonderer Weise zum Tragen kommt.

Figur 11a zeigt in einer Seitenansicht der erfindungsgemäßen Bodenreinigungsvorrichtung 10, wie das Führungsteil 14 gegenüber der Bodeneinheit 12 mittels der Gelenkanordnung 16 derart nach hinten zu einer Bedienungsperson (nicht gezeigt) verschwenkt ist, dass die erste Schwenkachse A in einem Winkel o von etwa 30° relativ zu einem zu reinigenden Untergrund verläuft. In diesem Zustand stützt die Abstützeinrichtung 90 die Gewichtskraft F_{GF} des Führungsteils 14 vollständig ab, sodass eine Bedienungsperson diese Gewichtskraft F_{GF} nicht übernehmen muss. Die Bedienungsperson kann mit sehr geringem Kraftaufwand das Führungsteil 14 zum Manövrieren nach links und nach rechts verschwenken, wobei sie an den Griffen 44 und 46 der Bedienungsanordnung 42 angreift und darüber die Bodenreinigungsvorrichtung 10 manövriert. Je nach Grad der Verschwenkung muss die Bedienungsperson anteilig das Gewicht des Führungsteils 14 halten.

Zum Manövrieren kann die Bedienungsperson insbesondere, wie in Figuren 11b und 11c gezeigt, das Führungsteil 14 der Bodenreinigungsvorrichtung 10 um die erste Schwenkachse A nach links verschwenken, wie durch Pfeil P₁ gezeigt. Dadurch verlagert sich auch der Schwerpunkt des Führungsteils 14 etwas nach links. Als Konsequenz verschiebt sich das Kräftegleichgewicht und es kommt in der Bodeneinheit 12 zu einem Moment um die zum Boden im Wesentlichen senkrecht verlaufende Hochachse der Bodeneinheit, auch Giermoment genannt. Dieser Effekt wird dadurch unterstützt, dass die Bodeneinheit 12 aufgrund der gegenläufig rotierenden Werkzeuge 18, 20 sowie aufgrund der Wirkung der Stützrollen 32 ohnehin relativ leicht auf dem Untergrund manövrierbar ist und aufgrund der Vortriebswirkung des Antriebs der gegenläufig rotierenden Werkzeuge 18, 20 in Vortriebsrichtung V nach vorne drängt. Dies führt dazu, dass infolge des Auslenkung des Führungsteils 14 gemäß dem Pfeil P₁ in Kombination mit der Vortriebswirkung und des resultierenden Giermoments die Bodenreinigungsvorrichtung äußerst leichtgängig in Richtung Pfeil P₂ nach links steuert.

Dieser Effekt wird auch dadurch unterstützt, dass die Bedienungsperson etwa durch leichtes Gegenhalten an den Griffen 44, 46 der Bedienungsanordnung 42 der Vortriebswirkung der Bodeneinheit 12 entgegenwirkt und dadurch der Lenkeffekt und das Giermoment verstärkt wird. Die Bedienungsperson kann beispielsweise den in Figur 11b linken Griff 44 in der gezeigten Neigung festhalten oder sogar entgegen der Wirkung der Vortriebskraft leicht nach hinten ziehen, wobei sie den rechten Griff 46 leicht nach vorne drückt und so über die doppelkardanische Gelenkanordnung 16 ein Drehmoment auf die Bodeneinheit 12 ausübt. Dies führt zu einer Kurvenfahrt, die beim Manövrieren vorteilhaft ausgenutzt werden kann. Ein weiterer Effekt, der dies unterstützt, besteht darin, dass die Vortriebswirkung dabei nicht gleichmäßig auf das Bodenteil wirkt, sondern aufgrund der in die Bodeneinheit 12 eingeleiteten horizontalen Kraftkomponente des Führungsteils 14 auf der rechten Seite der Bodeneinheit 12 stärker zu Tragen kommt. Dieser zusätzliche Effekt drängt die Bodeneinheit 12 zu einer stärkeren Bewegung nach links.

Gleichermaßen ist es aber auch möglich, in einer solchen Schrägstellung des Führungsteils 14 eine völlige Geradeausfahrt durchzuführen, etwa entlang einer Wand oder unterhalb eines Vorsprungs, etwa einem Möbelstück, unter dem sich die Bodeneinheit bewegt. Dabei kann durch das zur Seite geneigte Führungsteil 14 die Bedienungsperson in sicherem Abstand von der Wand oder dem Vorsprung laufen. Die Bedienungsperson sollte bei einer derartigen Geradeausfahrt mit geneigte Führungsteil 14 nicht gegenhalten, um zu vermeiden, dass die Bodeneinheit 12 einem Moment ausgesetzt wird. Dadurch lässt sich beispielsweise die Bürstenfläche der Werkzeuge 18, 20 maximal ausnutzen und eine optimale Reinigungswirkung auch nahe einer Wand oder unter überbauten Flächen erzielen. Wichtig ist bei einer derartigen Geradeausfahrt aber, dass die Bedienungsperson gerade nicht gegenhält oder das Führungsteil 14 zu sich zieht.

In all diesen Manövriersituationen bietet die erfindungsgemäße Abstützeinrichtung aber den Vorteil, dass sie die gesamte Gewichtskraft F_{GF} des Führungsteils 14 oder zumindest einen geringen bis hin zu einem großen Teil davon aufnimmt und auf die Bodeneinheit 12 überträgt. In jeder Manövriersituation wird die Bedienungsperson daher bereits geringfügig oder sogar erheblich entlastet. Die erfindungsgemäße Bodenreinigungsvorrichtung 10 ist demnach wesentlich einfacher zu bedienen und zu steuern, auch bei zeitlich ausgedehnten Reinigungsprozessen. Durch leichtes Verkippen der Bodenreinigungsvorrichtung 10 nach hinten unter Ausnutzung der Abstützeinrichtung oder durch Halten der Bodenreinigungsvorrichtung 10 gegen die Vortriebsrichtung lässt sich von der Bedienungsperson noch zusätzlich Einfluss auf die Vortriebswirkung nehmen.

Figur 11c zeigt eine analoge Steuerbewegung durch Auslenken des Führungsteils 14 entsprechend Pfeil P₃ nach rechts, sodass eine entsprechende Kurvenfahrt entsprechend Pfeil P₄ nach rechts folgt.

Diese Art des Steuerns kann durch unterschiedliche Wahl des Neigungswinkels β dosiert werden, d. h. bei großem Neigungswinkel β erfolgt eine relativ intensive Kurvenbewegung mit kleinem Kurvenradius, bei nur geringem Neigungswinkel β hingegen ist die Kurvenbewegung weniger intensiv und hat einen größeren Kurvenradius. Weitere Möglichkeiten zur Beeinflussung dieser Bewegung sind die Intensität des Gegenhaltens durch die Bedienungsperson aber auch die Größe der Vortriebswirkung durch die rotierenden Werkzeuge 18, 20.

Eine weitere Möglichkeit zur Beeinflussung der Manövriereigenschaften besteht optional darin, wie vorstehend angedeutet, die Position der Gelenkanordnung 16 an der Bodeneinheit 12 einzustellen. So kann die Gelenkanordnung 16 entlang der Schiene 80 auf der Bodeneinheit 12 nach vorne und nach hinten verschoben werden, was die Kinematik und das Manövrierverhalten der erfindungsgemäßen Bodenreinigungsvorrichtung 10 verändert. Es gilt die Faustregel, dass dann, wenn der Schwerpunkt des Führungsteils 50, an dem die Gewichtskraft F_{GF} angreift in Flucht oder nur mit geringem horizontalen Abstand (bei Betrachtung von oben, d. h. in horizontaler Projektion auf die Bodenfläche) zum Schwerpunkt der Bodeneinheit 12 angeordnet ist, die erfindungsgemäße Bodenreinigungsvorrichtung 10 neutraler gesteuert werden kann. Hingegen reagiert bei Vergrößerung des Abstandes die Bodenreinigungsvorrichtung 10 empfindlicher auf Auslenkbewegungen. Allerdings lässt sich durch Verlagern der Gelenkanordnung 16 entlang der Schiene 80 auf der Bodeneinheit 12 weiter nach hinten erreichen, dass die Reinigungswerkzeuge 18, 20 entlastet werden und nicht mehr so stark auf den Untergrund drücken. Gleiches gilt für das vorstehend angesprochene Verkippen des Führungsteils gegen die Wirkung der Abstützeinrichtung. Dadurch lässt sich die Reinigungsintensität beeinflussen, beispielsweise bei empfindlichen Untergrundflächen. Darüber hinaus lässt sich der Verschleiß einen Werkzeuge 18, 20 reduzieren. Die Gewichtskraft F_{GF} lastet dann stärker auf den Stützrollen 32.

Der Vollständigkeit halber sei angemerkt, dass sich die Auslenkbewegungen entsprechend Figuren 11b und 11c über den Sperrbügel 92 gänzlich blockieren lassen, was eine dauerhafte Geradeausfahrt der Bodenreinigungsvorrichtung 10 erleichtert. Auch kann der Sperrbügel 92 so ausgebildet sein, dass er nur geringe Auslenkungen mit geringen Winkeln β1 und β2 zulässt.

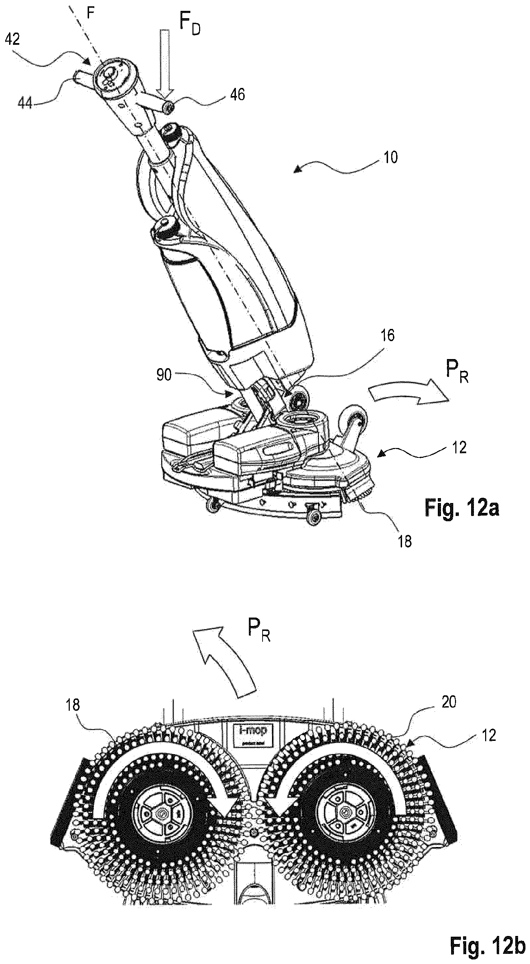

Fig. 12a und 12b zeigen einen Manövrierbetriebszustand, bei dem eine Bedienungsperson nur einseitig eine Art Druckkraft F_{D} auf den Griff 46 der Bedienungsanordnung 42 von oben ausübt und den anderen Griff 44 freigibt bzw. allenfalls führend hält, jedoch nicht belastend durch eine entsprechende Druckkraft. Durch diese Maßnahme kommt es zu einer leichten Verkippung des Führungsteils 14 um die erste Schwenkachse A und/oder ein leichtes Gegenhalten durch die Bedienungsperson. Entsprechend wirken unter Vermittlung der Abstützeinrichtung 90 und der Gelenkanordnung 16 in der Bodeneinheit 12 unausgeglichene Druckverhältnisse, die zu einer Querkraft in der Bodeneinheit 12 führen. Wie in Figur 12a gezeigt, kommt es zu einer Kurvenbewegung bezüglich der Vortriebsrichtung nach rechts entsprechend dem Pfeil P_{R} (in der Unteransicht weist der Pfeil P_{R} logischerweise nach links). Dabei ist es nicht erforderlich, den Griff 46 selbst oder die Bedienungsanordnung 42 als Ganzes um die Achse F zu drehen. Allein durch Belasten des Griffs 46 und ein damit verbundenes leichtes Gegenhalten durch die Bedienungsperson lässt sich in dieser beispielhaften Manövriersituation unter Vermittlung der Abstützeinrichtung 90 und in Wechselwirkung mit dem Vortrieb eine einfache Steuerbewegung ohne großen Aufwand durch die Bedienungsperson einleiten.

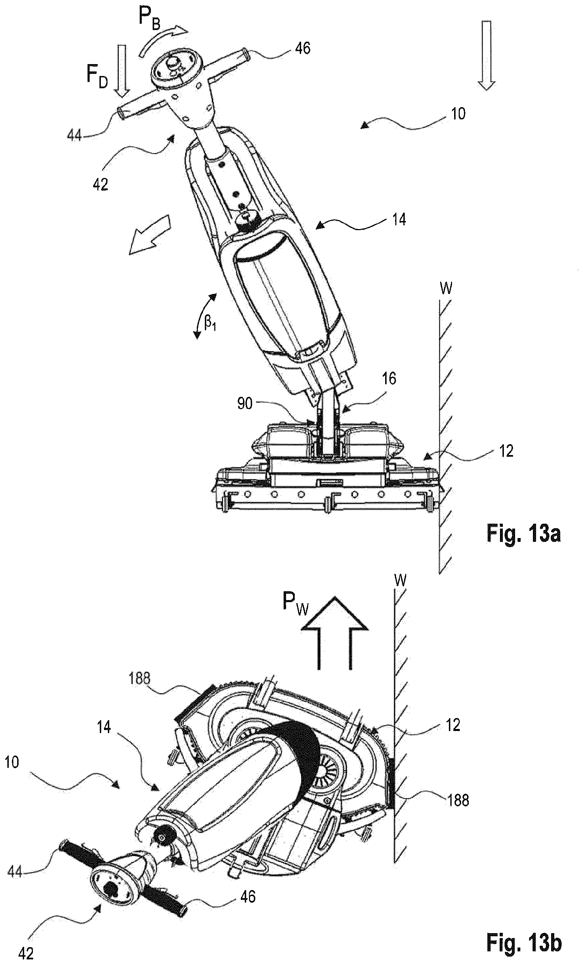

Fig. 13a und 13b zeigen eine Manövriersituation, bei der die Bedienungsperson die Bodenreinigungsvorrichtung 10 entlang einer Wand W (gegebenenfalls unter einem Vorsprung) steuert, wobei sie das Führungsteil 14 gegenüber den Bodenteil 12 von hinten betrachtet nach links seitlich verschwenkt hat, etwa zu einem Neigungswinkel β von ca. 70°. Die Bodeneinheit 12 ist darüber hinaus leicht schräg gestellt, umso die Bürstenfläche der Werkzeuge 18, 20 bestmöglich auszunutzen. Die Bodeneinheit 12 wird dabei mit einer oberflächenschonenden Gleitfläche 188 an der Wand W entlang gesteuert, d. h. wie durch den Pfeil Pw signalisiert parallel zur Wand. Dies ist dadurch möglich, dass die Bedienungsanordnung 42 von der Bedienungsperson leicht angedreht wird (siehe Pfeil P_{B}) und auf den Griff 44 eine leichte Druckkraft von oben ausgeübt wird (siehe Kraft F_{D}). Durch dieses Manöver lässt sich unter Vermittlung der Abstützeinrichtung 90 eine günstige Kraftverteilung in der Bodeneinheit 12 auf die gegenläufigen Werkzeuge 18, 20 erzielen. Damit kann die Bodenreinigungsvorrichtung 10 ohne geringen Aufwand für die Bedienungsperson leicht an der Wand W entlang parallel zu dieser manövriert werden.

Auch lässt sich anhand dieser Bilder erkennen, dass dann, wenn die Bedienungsperson auf eine Wand zusteuert, durch eine entsprechende Handhabung die Bodenreinigungsvorrichtung 10 ohne geringen Kraftaufwand, geradezu spielerisch, an der Wand beliebig, beispielsweise um 90 oder 180°, gedreht werden kann, ohne dass das Führungsteil 14 mit der Wand in Kontakt kommt.

Figuren 14a bis 14c zeigen, dass die erfindungsgemäße Bodenreinigungsvorrichtung 10 in eine platzsparende und leichter transportierbare Lager- bzw. Transportstellung bringbar ist. Wie aus den Figuren erkennbar lässt sich die Bodeneinheit 12 über die Gelenkanordnung 16 derart relativ zum Führungsteil 14 verschwenken und in dieser Position arretieren, dass die Lagervorsprünge 36 nach schräg vorne stehen und die Transportrollen 34 im wesentlichen in vertikaler Flucht zu dem Schaft 40 des Führungsteils 14 stehen. So lässt sich durch Angreifen an den Griffen 44, 46 die Bodenreinigungsvorrichtung 10 einfach auf den Transportrollen 34 verschieben, ohne dass die Werkzeuge 18, 20 Kontakt mit dem Untergrund haben. Auch lässt sich die Bodenreinigungsvorrichtung so beispielsweise gut abstellen. Bei Bedarf kann die Bodeneinheit 12 wieder in die vorstehend gezeigte Bedienungsstellung verbracht werden.

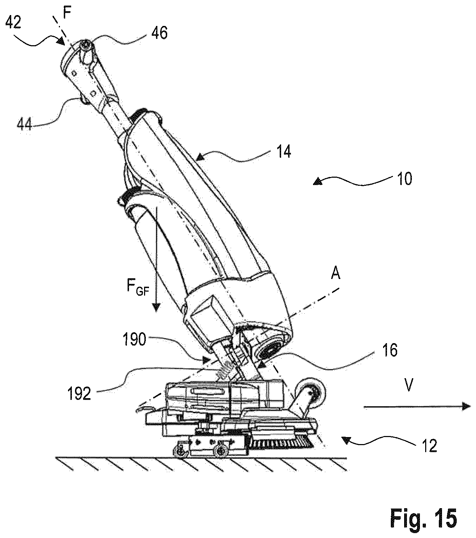

Figur 15 zeigt eine zweites Ausführungsform der Erfindung. Dabei ist die Abstützeinrichtung 190 lediglich als Druckfeder 192 ausgebildet, wie schematisch angedeutet. Dies hat den Effekt, dass beim Verschwenken des Führungsteils 14 um die zweite Schwenkachse B zumindest ein Teil der Gewichtskraft F_{GF} des Führungsteils 14 von der Feder aufgenommen wird. Je größer die Verschwenkbewegung des Führungsteils 14 ist, desto stärker wird die Abstützwirkung der Feder 192. Diese kann auch zur vollständigen Abstützung des Führungsteils 14 auf Block gehen. Ferner oder alternativ kann ein Anschlag vorgesehen sein, um bei einem Verschwenken um einen bestimmten Winkel α der erste Schwenkachse A (siehe beispielsweise Fig. 11a) eine vollständige Abstützung zu erreichen.

Die Ausgestaltung der Abstützeinrichtung 190 in Form einer Druckfeder 192 oder einer Baugruppe mit einer solchen Druckfeder 192 ist besonders einfach und kostengünstig.

Eine hierzu alternative Ausführungsform, die zeichnerisch nicht näher dargestellt ist, umfasst eine Abstützeinrichtung in Form eines einzigen Hebels, der nicht um eine zur Vortriebsrichtung V quer verlaufende Schwenkachse verschwenkbar ist, sondern um eine Schwenkachse seitlich weg klappbar ist, wobei diese Schwenkachse im Wesentlichen in Richtung der Vortriebsrichtung oder in einem spitzen Winkel zu dieser verläuft. Die Abstützeinrichtung kann dazu ausgebildet sein, eine Ablagefläche für das Führungsteil bereitzustellen, auf der das Führungsteil zwar um die erste Schwenkachse A verschwenkbar ist, jedoch bei Kontakt zwischen dem Führungsteil und der Ablagefläche nicht weiter um die zweite Schwenkachse B verschwenkt werden kann. In einem solchen Fall ist es auch möglich, die Bodenreinigungsvorrichtung mit lediglich einer Schwenkachse, nämlich der zweiten Schwenkachse auszugestalten, sodass das Führungsteil einfach auf der Abstützeinrichtung temporär stützend abgelegt werden kann.

In diesem Zusammenhang ist es möglich, beispielsweise an dem Führungsteil eine Mulde vorzusehen, in die die Abstützeinrichtung, insbesondere der klappbare Hebel eingreift, wenn das Führungsteil darauf abgelegt wird. Diese Mulde kann den Hebelform schlüssig aufnehmen oder auch eine Relativschwenkbewegung des Führungsteils relativ zur Bodeneinheit um die erste Schwenkachse zu lassen.

Alternativ zu einer Abstützeinrichtung mit Auflagerfläche, die ein Verschwenken des Führungsteils um die erste Schwenkachse A bei gleitendem Verschieben des Führungsteils auf der Auflagerfläche zulässt, kann gemäß einer weiteren Ausgestaltung der Erfindung vorgesehen sein, dass die Abstützeinrichtung ein formschlüssiges oder/und kraftflüssiges Eingreifen bzw. Angreifen der Abstützeinrichtung an dem Führungsteil vorsieht, sodass temporär jegliche Schwenkbewegung des Führungsteils relativ zur Bodeneinheit unterbunden wird. Bei dieser Ausführungsvariante lässt sich das Führungsteil also bei Angreifen der Abstützeinrichtung an dem Führungsteil weder um die erste noch um die zweite Schwenkachse verschwenken. Beispielsweise kann eine Ausnehmung oder Mulde am Führungsteil oder an der Bodeneinheit vorgesehen sein, in die die Abstützeinrichtung formschlüssig oder zumindest teilweise formschlüssig eingreift und so für eine Abstützung mit Einschränkung der Relativbewegung der beiden Komponenten zueinander sorgt.

Eine hierzu weitere alternative Ausführungsform, die zeichnerisch nicht näher dargestellt ist, umfasst beispielsweise eine Gelenkanordnung zwischen Bodeneinheit und Führungsteil, die insgesamt als Federelement ausgebildet ist, beispielsweise als flexibler Gummikörper oder als Einheit mit metallischen Federelementen. Dabei ist es möglich, beliebige Schwenkrichtungen mit einer Federwirkung zu versehen.

Weiterbildungen der Erfindung können auch vorsehen, dass die Abstützeinrichtung, ähnlich wie in der Ausführungsvariante gemäß Figur 15 gezeigt, starr ausgebildet ist, beispielsweise in Form einer Stange. Es ist auch möglich, einen Seilzug oder einen gefederten Seilzug als Abstützeinrichtung zu verwenden, beispielsweise derart, dass der Seilzug in Vortriebsrichtung vor der Gelenkanordnung angeordnet ist und so ab einer bestimmten Winkelstellung des Führungsteils relativ zur Bodeneinheit eine weitere Verschwenkung um die zweite Schwenkachse B blockiert, dabei aber eine Verschwenkung des Führungsteils um die erste Schwenkachse zulässt. Alternativ zu einem Seilzug kann auch eine Zugfeder vorgesehen sein, die an der Bodeneinheit in Vortriebsrichtung vor der Gelenkanordnung arretierbar ist.

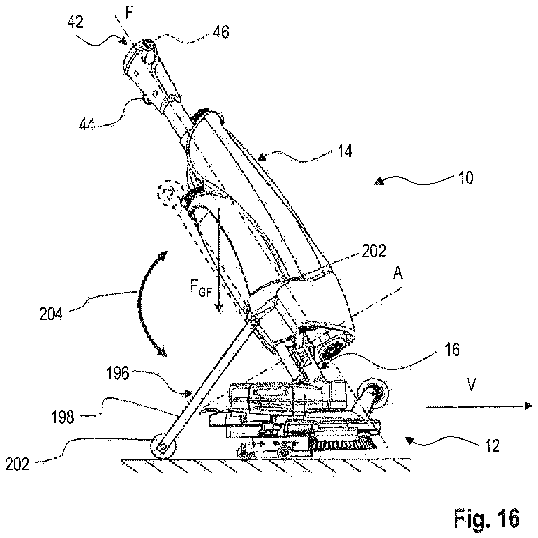

Gemäß einer weiteren erfindungsgemäßen Ausführungsvariante, die in Figur 16 gezeigt ist, kann an dem Führungsteil 14 eine Abstützeinrichtung 196 vorgesehen sein, die das Führungsteil 14 ab einem gewissen Winkel der ersten Schwenkachse A relativ zum Boden oder in einem gewissen Winkelbereich direkt am Boden abstützt. Dabei kann es sich beispielsweise um eine doppelschenkellige Gabel 198 handeln, die an ihrem oberen Ende über Zapfen 200 verschwenkbar an dem Führungsteil 14 gelagert ist. An ihrem unteren Ende können an der Gabel 198 Rollen 202 angeordnet sein, die im Betrieb der Bodenreinigungsvorrichtung 10 auf dem Boden stützend abrollen.

Gemäß dem Pfeil 204 lässt sich die Abstützeinrichtung 196 zwischen der in Figur 16 mit durchgezogener Linie gezeigten abstützenden Betriebsposition und einer mit Strichlinie gezeigten Parkposition verschwenken. Die Abstützeinrichtung 196 kann dabei in der Betriebsposition und in der Parkposition und gegebenenfalls auch in dazwischenliegenden Positionen arretiert, gegebenenfalls gefedert und/oder gedämpft arretiert werden. In der das Führungsteil 14 abstützenden Betriebsposition wird die Bedienungsperson dadurch entlastet, dass sie das Gewicht des Führungsteils 14 nicht über die Griffe 44, 46 halten muss, sondern allein an den Griffen 44, 46 angreifen kann, um die Reinigungsvorrichtung 10 mit leichten Bewegungen zu manövrieren. Ein leichtes Gegenhalten an einem der Griffe 44, 46 sorgt für die vorstehend beschriebenen Effekte zur Erzeugung eines Drehmoments in der Bodeneinheit 12.

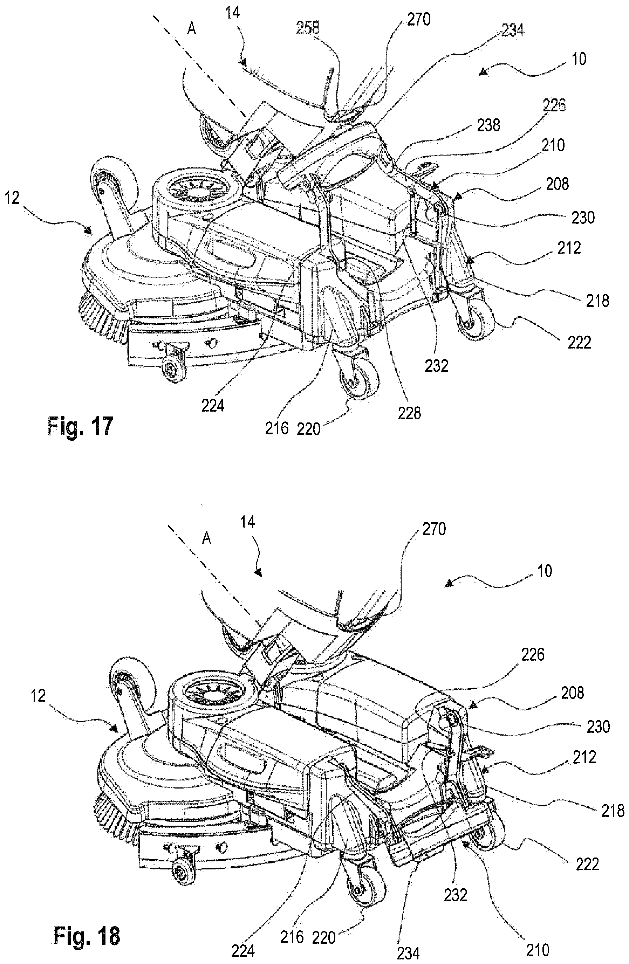

In den Figuren 17 bis 22 ist eine weitere Ausführungsform der vorliegenden Erfindung gezeigt, bei der an der Bodeneinheit 12 ein separates Abstützmodul 208 mit einer verschwenkbaren Abstützeinrichtung 210 vorgesehen ist. Die vorstehend bereits beschriebenen Komponenten der Bodeneinheit 12 und des Führungsteils 14 werden nicht nochmals beschrieben und sind auch nicht nochmals mit Bezugszeichen versehen. Es wird insbesondere auf die Unterschiede diese Ausführungsform zu den vorangehenden Ausführungsformen eingegangen.

Diese verschwenkbare Abstützeinrichtung 210 ist an einem Basiskörper 212 des Abstützmoduls 208 vorgesehen. Das Abstützmodul 208 kann modulartig an die Bodeneinheit 12 einer bestehende Bodenreinigungsvorrichtung 10 über eine vorbestimmte Kopplungsschnittstelle angebracht werden kann. Beispielsweise kann das Abstützmodul 208 als Zusatzbauteil für eine Nachrüstung einer bestehenden Bodenreinigungsvorrichtung 10 erworben und an dieser dauerhaft oder bei Bedarf angebracht werden.

Man erkennt, dass das Basiskörper 212 mit einem Gehäuse 214 ausgebildet ist. Dieses weist an seinem in Figuren 17 und 18 hinteren Bereich zwei Ausleger 216, 218 auf, an denen über jeweils eine vertikale Achse verschwenkbar Rollen 220, 222 drehbar gelagert sind. Die Rollen 220, 222 dienen zur Abstützung der Bodenreinigungsvorrichtung 10 hinter der Saugleiste. Sie richten sich selbsttätig während des Manövrierens der Bodenreinigungsvorrichtung 10 aus.

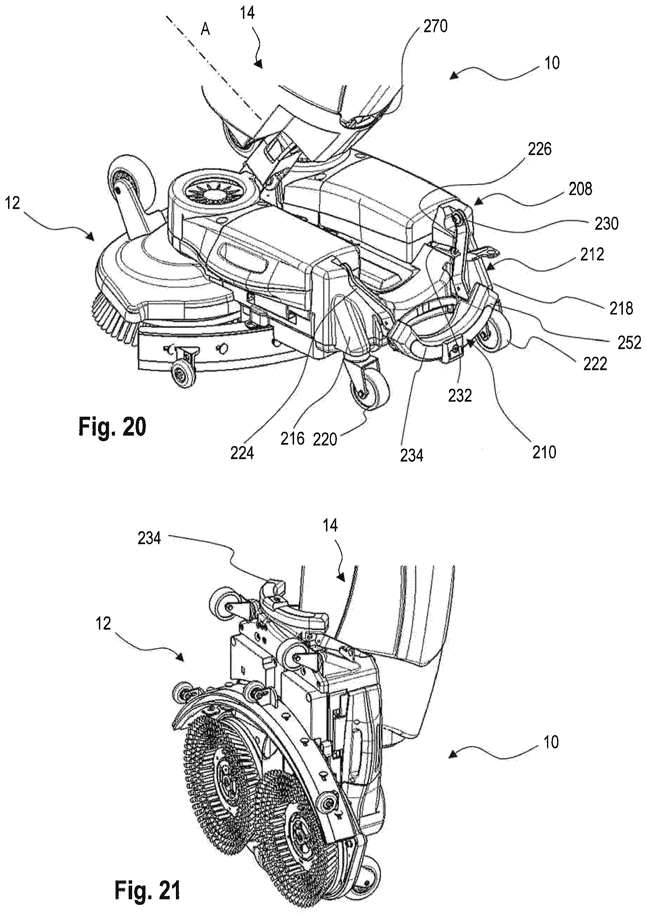

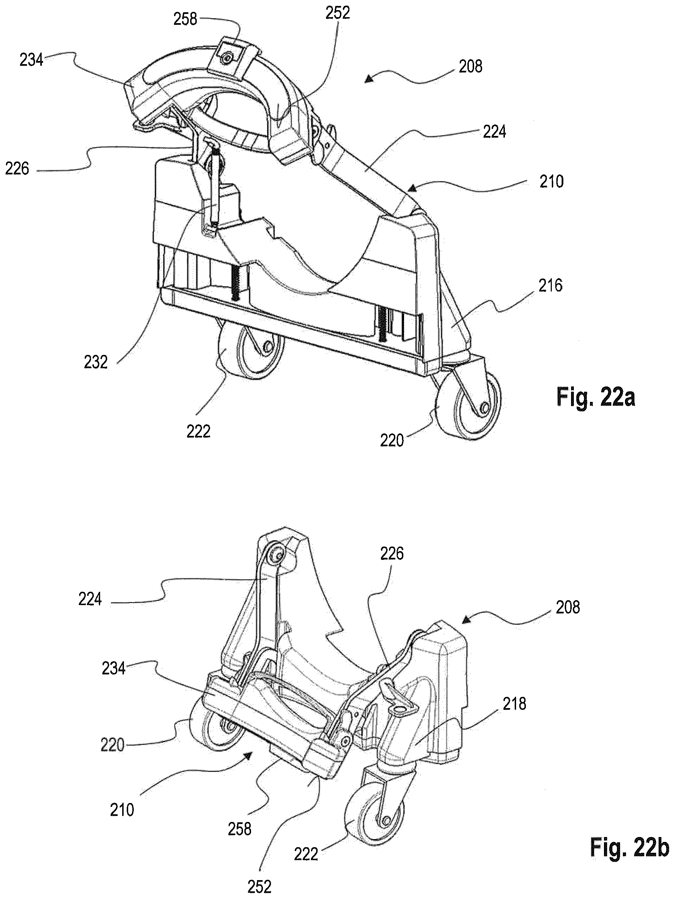

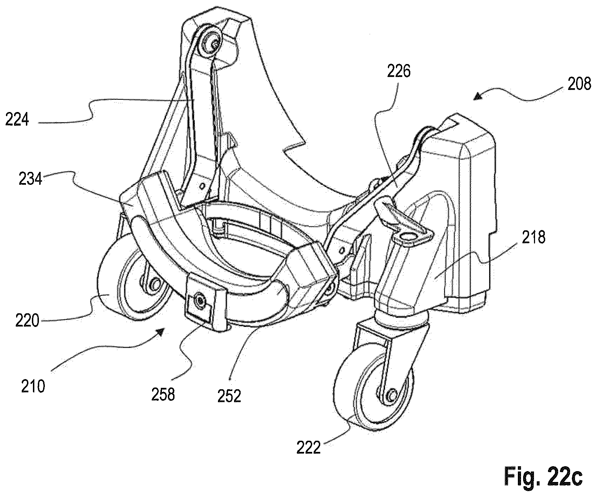

Figuren 22a, 20b und 22c zeigen das Abstützmodul 208 separat und losgelöst von der Bodenreinigungsvorrichtung 10. Über die speziell ausgestaltete Schnittstelle lässt sich die Bodenreinigungsvorrichtung mit diesem Basiskörper 212 lösbar verbinden.

Die Abstützeinrichtung 210 weist zwei an dem Basiskörper 212 des Abstützmoduls 208 verschwenkbar angebrachte Hebel 224, 226 auf. Die Hebel 224, 226 sind über Schwenkbolzen 228, 230 schwenkbar am Basiskörper 212 gelagert. Ferner ist wenigstens einer der Hebel 224, 226 über eine Zugfeder 232 in zwei vorbestimmte Stellungen federvorgespannt, was im folgenden noch im Detail beschrieben wird. An ihrem von der Lagerung am Basiskörper 212 über die Schwenkbolzen 228, 230 entfernten Ende ist an den beiden Hebeln 224, 226 ein Auflagerelement 234 angebracht. Auch dieses ist über Schwenkbolzen 230 relativ zu den Hebeln 224, 226 verschwenkbar und über einen Rasthaken 238 in die in Figur 17 gezeigten Stellung verrastbar.

Man erkennt bei einem Vergleich der Figuren 17 und 18, dass sich die Abstützeinrichtung 210 selbst zwischen einer Abstützstellung (Figur 17) und einer Parkstellung (Figur 18) verschwenken lässt. Durch geeignete Wahl des Anlenkpunktes 240 der Zugfeder 232 am Gehäuse 214 des Basiskörpers 212 relativ zu der durch die Schwenkbolzen 228, 230 vorgegebenen Schwenkachse der beiden Hebel 224, 226, wie in Figuren 17 und 18 gezeigt, ist die verschwenkbare Abstützeinrichtung 210 sowohl in die Abstützstellung (Figur 17) als auch in die Parkstellung (Figur 18) vorgespannt. Bei einer Verschwenkung der Abstützeinrichtung 210 von der einen in die andere Stellung wird die Zugfeder 232 zunächst gespannt, erreicht zwischenzeitlich einen maximal gespannten Zustand und entspannt sich dann wieder bei weiterer Schwenkbewegung in Richtung zu der jeweils angestrebten Zielstellung. Das gleiche gilt für die entgegengesetzte Verschwenkung. Dadurch ist gewährleistet, dass die Abstützeinrichtung 210 zuverlässig und federvorgespannt in der gewünschten Stellung verbleibt.

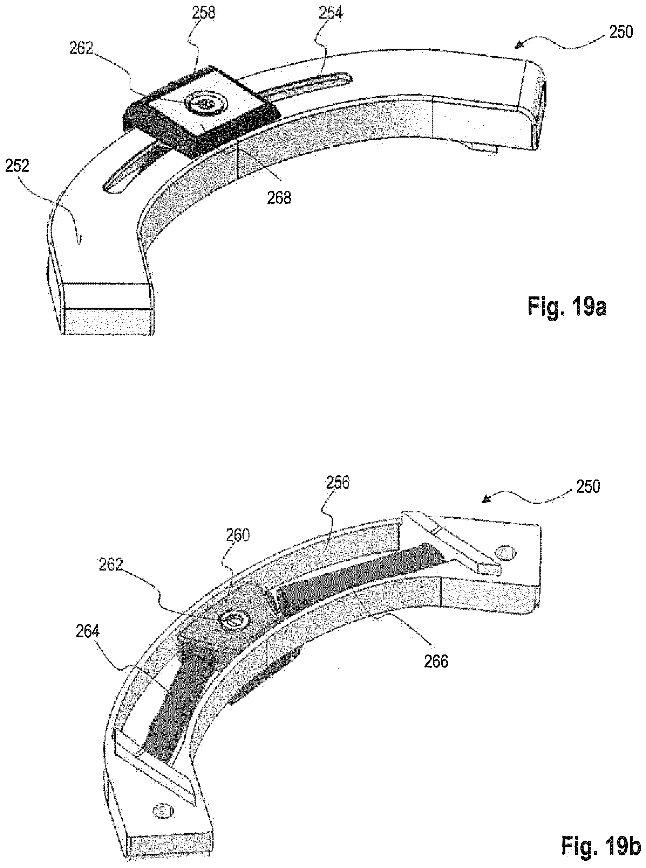

Wendet man sich dem Auflagerelement 234 zu, wie dieses in den Figuren 19a und 19b in Einzelteildarstellung abgebildet ist, so erkennt man, dass dieses einen bogenförmigen Grundkörper 250 aufweist, der an seiner in Figur 19a gezeigten Oberseite eine weitgehend geschlossene Oberfläche 252 mit einem bogenförmigen Führungsdurchbruch 254 umfasst. An seiner Unterseite (siehe Figur 19b) ist der Grundkörper 250 mit einer Ausnehmung 256 versehen. In dem Führungsdurchbruch 254 ist ein Führungsschlitten 258 geführt, der sich innerhalb des Führungsdurchbruchs 254 entlang einer durch diesen vorgegebenen bogenförmigen Bewegungsbahn bewegen lässt und dabei auf der Oberfläche 252 des Grundkörpers 250 abgleitet.

Man erkennt in Figur 19b, dass der Führungsschlitten 258 mit einem trapezförmigen Gegenkörper 260 über eine Schraubenverbindung 262 innerhalb der Ausnehmung 256 gesichert ist, wobei sich der Gegenkörper 260 innerhalb der Ausnehmung 256 mit dem Führungsschlitten 258 bewegt. Beidseits des trapezförmigen Gegenkörpers 260 sind Federelemente vorgesehen, im vorliegenden Fall Druckfedern 264, 266, die den Führungsschlitten 258 zusammen mit dem Gegenkörper 260 in eine mittige Stellung innerhalb des Führungsdurchbruchs 254 bzw. der Ausnehmung 256 vorspannen. Gegen die Wirkung dieser die beiden Druckfehlern 264, 266 umfassenden Federanordnung lässt sich der Führungsschlitten 258 entlang einer bogenförmigen Bewegungsbahn innerhalb des Durchbruchs 256 bewegen. Der Führungsschlitten 258 weist an seiner Oberseite eine metallische Platte 268 auf, die gegebenenfalls magnetisch ausgebildet ist und zur temporären Kopplung mit dem Führungsteil 14 dienen kann.

In Figur 17 erkennt man, wie das Führungsteil 14 auf dem Führungsschlitten 258 aufliegt. Hierfür kann auch ein formschlüssiges Eingreifen vorgesehen sein, beispielsweise derart, dass in dem Führungsteil 14 mittig eine Ausnehmung 270 (siehe Figuren 17 und 18) vorgesehen ist, die den Führungsschlitten 258 im wesentlichen formschlüssig aufnimmt. Gegebenenfalls kann hierzu noch über eine Magnetanordnung unter Vermittlung der Metallplatte 268 ein unterstützender Kraftschluss vorgesehen sein. Dadurch wird das Führungsteil 14 mit dem Führungsschlitten 258 lösbar temporär gekoppelt. In der Folge kann das Führungsteil 14 um die erste Schwenkachse A geführt über den Führungsschlitten 258 auf dem Auflagerelement 234 nach links und rechts geschwenkt werden, wobei diese Verschwenkung gegen den Widerstand der die beiden Federn 264, 266 umfassenden Federanordnung erfolgt. Eine Rückführung des Führungsteils 14 in eine mittige neutrale Stellung wird durch die Federanordnung unterstützt. Die Abstützeinrichtung 210 wirkt dabei so, wie vorstehend bezüglich der anderen erfindungsgemäßen Ausführungsbeispiele beschrieben. Sie entlastet die Bedienungsperson davon, das Gewicht des Führungsteils 14 über die beiden Griffe 44, 46 vollständig zu halten, und sie erleichtert ferner das Manövrieren in der vorstehend ausführlich beschriebenen Weise.

Wendet man sich der Parkstellung der Abstützeinrichtung 210 zu, so erkennt man, dass in dieser Parkstellung das Auflagerelement 234 wiederum zwei verschiedene Stellungen annehmen kann, nämlich die Stellung gemäß der Darstellung nach Figur 18, in der das Auflagerelement 234 mit seiner Oberfläche 252 nach unten weist, und die Stellung gemäß Figuren 20 und 21. Die Stellung gemäß Figur 18 hat den Vorteil, dass sich das Auflagerelement 234 bereits in der richtigen Ausrichtung befindet, wenn es nach oben in die Betriebsstellung zum Abstützen des Führungsteils 14 verschwenkt wird.

Das Auflagerelement 234 lässt sich ausgehend von der in Figur 18 gezeigten Stellung zusätzlich in die in Figur 20 gezeigte Parkstellung verschwenken, in der es raumsparend relativ zu den Hebeln 244, 226 nach oben geklappt ist. Die Oberfläche 252 weist dann von der Reinigungsvorrichtung 10 aus gesehen nach hinten. In dieser Stellung lässt sich das Auflagerelement 234 platzsparend anordnen. Diese Stellung gemäß Figur 20 eignet sich besonders dafür, die Reinigungsvorrichtung 10 in ihre Parkstellung gemäß Figur 21 zu verbringen, wie sie vorstehend mit Bezug auf Figuren 14a bis 14c ausführlich beschrieben wurde.

In den Figuren 22a bis 22c erkennt man das nachrüstbare separat ausgebildete Abstützmodul 208 nochmals separat in verschiedenen Ansichten. In Figur 22a ist die Abstützeinrichtung 210 in ihrer Betriebsposition entsprechend Figur 17 zur Abstützung gezeigt, in Figur 22b ist die Abstützeinrichtung 210 in der eingeklappten Stellung entsprechend Figur 18 gezeigt und in Figur 23c ist ausgehend davon die Abstützeinrichtung 210 in ihrer Parkstellung gezeigt, wobei auch das Auflagerelement 234 relativ zu den Hebeln 224, 226 verschwenkt ist.

Mit dieser Ausführungsform lässt sich ein Abstützmodul 208 bereitstellen, dass an einer Reinigungsvorrichtung 10 nachgerüstet bzw. an dieser bedarfsweise angebracht werden kann.

Es sei angemerkt, dass die Abstützeinrichtungen gemäß der vorliegenden Erfindung oder die Gelenkanordnung zusätzlich mit Dämpferelementen ausgebildet sein können, um Schwingungen zu dämpfen oder um einen allzu abrupten Anschlag zu vermeiden. Derartige Dämpfer können beispielsweise pneumatische oder hydraulische Dämpfer sein oder einfach in Form eines dämpfenden Gummikörpers ausgebildet sein.Die Erfindung hat den Vorteil, dass durch die Abstützeinrichtung in ihrer unterschiedlichen Ausgestaltung gemäß den verschiedenen Ausführungsbeispielen die Gewichtskraft des Führungsteils 14 vollständig oder zumindest teilweise in einer Vielzahl von Manövriersituationen auf die Bodeneinheit 12 eingeleitet und von dieser übernommen werden kann, sodass eine Bedienungsperson die erfindungsgemäße Bodenreinigungsvorrichtung 10 deutlich besser manövrieren kann. Es wird auf vorstehende Erläuterungen in der Beschreibungseinleitung und in der Figurenbeschreibung verwiesen.

Durch einfache Kippbewegungen und ausgeglichene oder unterschiedliche Drucckraftverteilung an der Bedienungsanordnung 42, insbesondere über die Griffe 44, 46, lässt sich die Bodenreinigungsvorrichtung 10 unter Ausnutzung der Vortriebswirkung der gegenläufig rotierenden und leicht gegenüber der Bodenfläche geneigten Werkzeuge 18, 20 in verschiedenen Manövriersituation einfach handhaben. Kippbewegungen des Führungsteils 14 nach links, nach rechts, nach hinten (zu Bedienungsperson hin) und nach vorne (von der Bedienungsperson weg) sind einfach möglich, solange die Abstützeinrichtung nicht greift. Sobald die Abstützeinrichtung in ihrer unterschiedlichen Ausgestaltung greift, lassen sich vorteilhafte Manövrierbewegungen durch geeignete Kraftübertragung (siehe vorstehende Erläuterung) ohne großen Aufwand durch die Bedienungsperson erzielen.

## Patentansprüche

1. Bodenreinigungsvorrichtung (10), insbesondere Scheuer-Saug-Bodenreinigungsvorrichtung (10), umfassend:
- eine Bodeneinheit (12), der eine Vortriebsrichtung (V) parallel zu einer zu reinigenden Bodenfläche zugeordnet ist,
- ein Werkzeug (18, 20), das der Bodeneinheit (12) zugeordnet ist und das in einem Betriebszustand die Bodenfläche kontaktiert, wobei das Werkzeug (18, 20) mittels eines Antriebs relativ zu der Bodenfläche bewegbar ist;
- ein Führungsteil (14) zum Führen der Bodenreinigungsvorrichtung (10); und
- eine Gelenkanordnung (16), die die Bodeneinheit (12) und das Führungsteil (14) gelenkig miteinander verbindet;
wobei die Bodenreinigungsvorrichtung (10) dazu eingerichtet ist, eine Vortriebswirkung gegenüber der Bodenfläche in Vortriebsrichtung (V) zu erzeugen,
wobei die Gelenkanordnung (16) mit einem ersten Schwenkgelenk ausgebildet ist, das einen ersten Schwenkbereich mit einer festgelegten oder virtuellen ersten Schwenkachse (A) aufweist und eine Schwenkbewegung des Führungsteils (14) relativ zur Bodeneinheit (12) um den ersten Schwenkbereich, insbesondere um die erste Schwenkachse (A), zulässt,
wobei die erste Schwenkachse (A) in einer ersten Schwenkachsenebene (E) liegt, die senkrecht zur Bodenfläche verläuft und einen die Vortriebsrichtung (V) definierenden Richtungsvektor enthält,
**dadurch gekennzeichnet,**
**dass** in einem Manövrierbetriebszustand das Führungsteil (14) um die erste Schwenkachse (A) relativ zu der Bodeneinheit (12) verschwenkbar ist, wobei das Führungsteil (14) in der ersten Schwenkachsenebene (E) relativ zu der Bodeneinheit (12) oder zum Boden fixierbar oder temporär abstützbar ist, wobei infolge der Schwenkbewegung des Führungsteils (14) um die erste Schwenkachse (A) unter Vermittlung der Abstützung des Führungsteils (14) in der Schwenkachsenebene (E) die Vortriebswirkung ein das Manövrieren der Bodenreinigungsvorrichtung (10) begünstigendes Rotationsmoment der Bodeneinheit (12) auf der Bodenfläche bewirkt.

2. Bodenreinigungsvorrichtung (10) nach Anspruch 1, **dadurch gekennzeichnet,**
- **dass** die erste Schwenkachse (A) mit dem die Vortriebsrichtung definierenden Richtungsvektor (V) in dem Manövrierbetriebszustand einen spitzen Winkel in einem Bereich von 5°-85° einschließt, vorzugsweise von 15° bis 45°; oder
- **dass** das erste Schwenkgelenk an der Bodeneinheit (12) um die erste Schwenkachse dauerhaft fixierbar oder in vorbestimmten Positionen arretierbar ist, 17.02.2023 die die Ausrichtung der ersten Längsachse (A) zu dem die Vortriebsrichtung definierenden Richtungsvektor (V) in dem Manövrierbetriebszustand vorsehen.

3. Bodenreinigungsvorrichtung (10) nach einem der Ansprüche 1 oder 2, **dadurch gekennzeichnet, dass** die Gelenkanordnung (16) mit einem zweiten Schwenkgelenk ausgebildet ist, das einen zweiten Schwenkbereich mit einer festgelegten oder virtuellen zweiten Schwenkachse (B) aufweist und eine Schwenkbewegung des Führungsteils (14) relativ zur Bodeneinheit (12) um den zweiten Schwenkbereich zulässt, wobei die zweite Schwenkachse (B) im wesentlichen parallel zur Bodenfläche und quer zur ersten Schwenkachse (A) verläuft.

4. Bodenreinigungsvorrichtung (10) nach Anspruch 3, **dadurch gekennzeichnet, dass** der Gelenkanordnung (16) eine Abstützeinrichtung (90) funktional zugeordnet ist, die in dem Manövrierbetriebszustand das Führungsteil oder die Gelenkanordnung (16) mit dem ersten Schwenkgelenk relativ zu der Bodeneinheit (12) oder relativ zum Boden, zumindest temporär oder/und zumindest teilweise abstützt, wobei insbesondere vorgesehen ist,
- dass die Abstützeinrichtung (90) zumindest temporär in wenigstens einer Arretierposition, bevorzugt in wenigstens zwei, besonders bevorzugt in wenigstens drei Arretierpositionen arretierbar ist; oder
- dass die Abstützeinrichtung (90) stufenlos arretierbar ist.

5. Bodenreinigungsvorrichtung (10) nach Anspruch 4, **dadurch gekennzeichnet,**
- **dass** die Abstützeinrichtung (90) starr ausgebildet ist; und/oder
- **dass** die Abstützeinrichtung (190) ein Federelement (192) umfasst, das eine Stützwirkung, vorzugsweise eine progressive, Stützwirkung, in Abhängigkeit von dem Winkel zwischen der ersten Schwenkachse (A) und dem die Vortriebsrichtung definierenden Richtungsvektor (V) aufweist; und/oder
- **dass** der Abstützeinrichtung (90) ein Dämpferelement zugeordnet ist.

6. Bodenreinigungsvorrichtung (10) nach einem der Ansprüche 3 bis 5, **gekennzeichnet durch** eine dem ersten Schwenkbereich mit seiner ersten Schwenkachse (A) zugeordnete Abstützeinrichtung (92, 210), die dazu eingerichtet ist, das Führungsteil (14) beim Verschwenken um die erste Schwenkachse (A) gegenüber der Bodeneinheit (12) ab einem vorgegebenen oder vorgebbaren Schwenkwinkel zumindest teilweise abzustützen.

7. Bodenreinigungsvorrichtung (10) nach einem der vorangehenden Ansprüche, 17.02.2023 **dadurch gekennzeichnet, dass** die Abstützeinrichtung (210) dazu ausgebildet ist, das Führungsteil beim Verschwenken um die erste Schwenkachse (A) gegenüber der Bodeneinheit (12) abzustützen oder zu führen, vorzugsweise entlang einer bogenförmigen Bahn, wobei bevorzugt die Abstützeinrichtung (210) dazu ausgebildet ist, das Führungsteil (14) beim Verschwenken um die erste Schwenkachse (A) federnd abzustützen, besonders bevorzugt mit zunehmendem Schwenkwinkel in beide Schwenkrichtungen progressiv federnd.

8. Bodenreinigungsvorrichtung (10) nach einem der Ansprüche 3 bis 7, **dadurch gekennzeichnet, dass** die Gelenkanordnung (16) ein Verbindungselement (62) aufweist, das das erste Schwenkgelenk mit dem zweiten Schwenkgelenk (B) verbindet, wobei das Verbindungselement (62) gegenüber der Bodeneinheit (12) um die zweite Schwenkachse (B) verschwenkbar ist und das Führungsteil (14) gegenüber dem Verbindungselement (62) um den ersten Schwenkbereich mit seiner ersten Schwenkachse (A) verschwenkbar ist, wobei bevorzugt das Verbindungselement (62) gegenüber der Bodeneinheit (12), gegebenenfalls federnd, abstützbar ist.

9. Bodenreinigungsvorrichtung (10) nach Anspruch 4 und einem der vorangehenden Ansprüche, **dadurch gekennzeichnet,**
- **dass** die Abstützeinrichtung (90) dem Verbindungselement (62) zugeordnet ist und ein Abstützelement (106) umfasst, das in dem Manövrierbetriebszustand die Bodeneinheit (12) abstützend kontaktiert; und/oder
- **dass** die Abstützeinrichtung (90) integral mit der Gelenkanordnung (16) oder als separate Baugruppe ausgebildet ist, die an der Bodenreinigungsvorrichtung (10) vorzugsweise modular anbringbar und von dieser lösbar ist; und/oder
- **dass** die Gelenkanordnung (16) als Doppel-Kardangelenk ausgebildet ist und die Abstützeinrichtung (90) bzw. zumindest eine der Abstützeinrichtungen (90) integral mit dem Doppel-Kardangelenk ausgebildet ist.

10. Bodenreinigungsvorrichtung (10) nach Anspruch 4 und einem der vorangehenden Ansprüche, **dadurch gekennzeichnet, dass** die Abstützeinrichtung (90) von einem Bediener bedarfsweise aktivierbar oder deaktivierbar ausgebildet ist, wobei bevorzugt die Abstützeinrichtung von einem Bediener zwischen einer Betriebsposition und einer Parkposition verschwenkbar ist, wobei die Abstützeinrichtung vorzugsweise in wenigstens einer von Betriebsposition und Parkposition arretierbar ist.

11. Bodenreinigungsvorrichtung (10) nach Anspruch 4 und einem der vorangehenden Ansprüche, **dadurch gekennzeichnet, dass** der Abstützeinrichtung (90) ein 17.02.2023 Adhäsionselement (116), insbesondere ein Magnet, zugeordnet ist, das dazu eingerichtet ist, die Abstützeinrichtung (90) beim Abstützen gegen ein Verschwenken entgegen der Abstützrichtung bis zu einer Grenzkraft zu sichern, wobei bevorzugt die Abstützeinrichtung, vorzugsweise über das Adhäsionselement, eine im wesentlichen formschlüssige oder/und kraftschlüssige Verbindung zwischen der Abstützeinrichtung und dem Führungsteil (14) bzw. der Bodeneinheit (12) bereitstellt.

12. Bodenreinigungsvorrichtung (10) nach einem der Ansprüche 3 bis 11, **dadurch gekennzeichnet, dass** die zweite Schwenkachse (B) im Wesentlichen senkrecht gegenüber der ersten Schwenkachse (A) ausgerichtet ist.

13. Bodenreinigungsvorrichtung (10) nach einem der vorangehenden Ansprüche, **dadurch gekennzeichnet,**
- **dass** das Führungsteil (14) eine Längsachse umfasst, die bevorzugt senkrecht zu der ersten Schwenkachse (A) und gegebenenfalls senkrecht zu der zweiten Schwenkachse (B) orientiert ist; und/oder
- **dass** die Gelenkanordnung (16) an der Bodeneinheit (12) derart anbringbar ist, dass die Gewichtskraft des Führungsteils (14) über die Gelenkanordnung (16) in die Bodeneinheit (12) an einem geometrischen Ort der Bodeneinheit (12) eingeleitet wird, der in Vortriebsrichtung (V) betrachtet vor einem Flächenschwerpunkt oder Masseschwerpunkt der Bodeneinheit liegt; und/oder
- **dass** die Bodeneinheit (12) eine Befestigungsvorrichtung umfasst, mittels derer die Gelenkanordnung (16) an unterschiedlichen Befestigungspositionen entlang der Vortriebsrichtung (V) an der Bodeneinheit (12) variabel befestigbar ist; und/oder
- **dass** ein Massenverhältnis zwischen Bodeneinheit (12) und Führungsteil (14) im Bereich von 1:5 bis 1:1, oder 1:1 bis 5:1 ausgebildet ist; und/oder
- **dass** die Bodenreinigungsvorrichtung (10) ferner einen Parkzustand umfasst, wobei in dem Parkzustand die Bodeneinheit (12) relativ zu dem Führungsteil (14) in eine raumsparende Parkposition verlagerbar und in dieser arretierbar ist; und/oder
- **dass** die Abstützeinrichtung dazu ausgebildet ist, das Führungsteil vollständig gegenüber der Bodeneinheit zu verriegeln, sodass eine Verschwenkung um die erste Schwenkachse und gegebenenfalls um die zweite Schwenkachse zumindest in einem vorbestimmten Winkelbereich blockiert ist.

14. Abstützeinrichtung (90) für eine Bodenreinigungsvorrichtung nach einem der vorangehenden Ansprüche, bevorzugt umfassend eine Basis (94), mit der sie entweder an einem Schaft (40) oder an der Bodeneinheit (12) anbringbar ist, sowie wenigs-17.02.2023 tens eine Stützstrebe, die dauerhaft oder durch Verlagern in eine Stützstellung die Gewichtskraft des Schaftes (40) in die Bodeneinheit (12) einleitet.

15. Abstützeinrichtung (90) nach Anspruch 14, wobei die Abstützeinrichtung (90) einen Sperrbügel (92) umfasst, der vorzugsweise verschwenkbar ist, wobei der Sperrbügel (92) dazu eingerichtet ist, dass er jegliches Verschwenken des Führungsteils um die erste Schwenkachse (A) blockiert oder ein Verschwenken erst ab einem vorbestimmten Schwenkwinkel sperrt.

## Claims

1. A floor cleaning device (10), in particular a scrub vacuum floor cleaning device (10), comprising:
- a floor unit (12) which is assigned a direction of advance (V) parallel to a floor surface to be cleaned,
- a tool (18, 20) which is assigned to the floor unit (12) and which, in an operating state, contacts the floor surface, the tool (18, 20) being movable relative to the floor surface by means of a drive;
- a guide member (14) for guiding the floor cleaning device (10); and
- a joint assembly (16) connecting the floor unit (12) and the guide member (14) in an articulate manner;
wherein the floor cleaning device (10) is configured to produce an advance effect with respect to the floor surface in the direction of advance (V),
wherein the joint assembly (16) is configured with a first pivot joint having a first pivot range with a defined or virtual first pivot axis (A) and allowing a pivot movement of the guide member (14) relative to the floor unit (12) about the first pivot range, in particular about the first pivot axis (A),
wherein the first pivot axis (A) is in a first pivot axis plane (E) which is perpendicular to the floor surface and contains a direction vector defining the direction of advance (V), **characterized in**
**that** in a maneuvering operating state, the guide member (14) can be pivoted about the first pivot axis (A) relative to the floor unit (12), wherein the guide member (14) can be fixed or temporarily supported in the first pivot axis plane (E) relative to the floor unit (12) or to the floor, wherein, as a result of the pivoting movement of the guide member (14) about the first pivot axis (A), with the support of the guide member (14) in the pivot axis plane (E) being conveyed, the advance effect brings about a moment of rotation of the floor unit (12) on the floor surface that benefits the maneuvering of the floor cleaning device (10).

2. Floor cleaning device (10) of claim 1, **characterized in**
- **that** in the maneuvering operating state, the first pivot axis (A) and the direction vector (V) defining the direction of advance enclose an acute angle ranging between 5° and 85°, preferably between 15° and 45°; or
- **that** the first pivot joint is permanently fixable to the floor unit (12) about the first pivot axis or lockable in predetermined positions providing for the alignment of the first longitudinal axis (A) with the direction vector (V) defining the direction of advance in the maneuvering operating state.

3. Floor cleaning device (10) of any one of claims 1 or 2, **characterized in that** the joint assembly (16) is configured with a second pivot joint having a second pivot range with a defined or virtual second pivot axis (B) and allowing a pivot movement of the guide member (14) relative to the floor unit (12) about the second pivot range, wherein the second pivot axis (B) is substantially parallel to the floor surface and transverse to the first pivot axis (A).

4. Floor cleaning device (10) of claim 3, **characterized in that** the joint assembly (16) is functionally assigned to a support device (90) which, in the maneuvering operating state, supports the guide member or the joint assembly (16) with the first pivot joint relative to the floor unit (12) or relative to the floor at least temporarily or/and at least partially, wherein it is in particular provided that
- the support device (90) is lockable at least temporarily in at least one locking position, preferably in at least two, particularly preferably in at least three locking positions; or
- that the support device (90) is continuously lockable.

5. Floor cleaning device (10) of claim 4, **characterized in**
- **that** the support device (90) is rigid; and/or
- **that** the support device (190) comprises a spring element (192) having a support effect, preferably a progressive support effect, depending on the angle between the first pivot axis (A) and the direction vector (V) defining the direction of advance; and/or
- **that** a damper element is assigned to the support device (90).

6. Floor cleaning device (10) of any one of claims 3 to 5, **characterized by** a support device (92, 210) which is assigned to the first pivot range with its first pivot axis (A) and is configured to at least partially support the guide member (14) when pivoting about the first pivot axis (A) with respect to the floor unit (12) from a predetermined or predeterminable pivot angle.

7. Floor cleaning device (10) according to any one of the preceding claims, **characterized in that** the support device (210) is configured to support or guide the guide member when pivoting about the first pivot axis (A) with respect to the floor unit (12), preferably along an arcuate path, wherein preferably the support device (210) is configured to resiliently support the guide member (14) when pivoting about the first pivot axis, especially preferably with resilient support with increasing pivot angle in both pivot directions.

8. Floor cleaning device (10) of any one of claims 3 to 7, **characterized in that** the joint assembly (16) comprises a connecting member (62) connecting the first pivot joint to the second pivot joint (B), wherein the connecting member (62) is pivotable relative to the floor unit (12) about the second pivot axis (B) and the guide member (14) is pivotable relative to the connecting member (62) about the first pivot range with its first pivot axis (A), wherein the connecting member (62) can be preferably supported, resiliently, with respect to the floor unit (12).

9. Floor cleaning device (10) of claim 4 and any one of the preceding claims, **characterized in**
- **that** the support device (90) is assigned to the connecting member (62) and comprises a support member (106) which in the maneuvering operating state, contacts the floor unit (12), thereby providing support; and/or
- **that** the support device (90) is integrally formed with the joint assembly (16) or as a separate assembly that is preferably modularly attachable to and detachable from the floor cleaning device (10); and/or
- **that** the joint assembly (16) is configured as a double universal joint and the support device (90) or at least one of the support devices (90) is integrally formed with the double universal joint.

10. Floor cleaning device (10) of claim 4 and any one of the preceding claims, **characterized in that** the support device (90) can be activated or deactivated by an operator as required, wherein preferably the support device is pivotable by an operator between an operating position and a parking position, wherein the support device is preferably lockable in at least an operating position and a parking position.

11. Floor cleaning device (10) of claim 4 and any one of the preceding claims, **characterized in that** an adhesion member (116), in particular a magnet, is assigned to the support device (90) and is configured to secure the support device (90) during support against pivoting against the support direction up to a limit force, wherein preferentially the support device, preferably via the adhesion member, provides a substantially positive or/and non-positive connection between the support device and the guide member (14) or the floor unit (12).

12. Floor cleaning device (10) of any one of claims 3 to 11, **characterized in that** the second pivot axis (B) is substantially perpendicular relative to the first pivot axis (A).

13. Floor cleaning device (10) of any one of the preceding claims, **characterized in**
- **that** the guide member (14) comprises a longitudinal axis which is preferably perpendicular to the first pivot axis (A) and, where applicable, perpendicular to the second pivot axis (B); and/or
- **that** the joint assembly (16) is attachable to the floor unit (12) in such a way that the weight force of the guide member (14) is introduced via the joint assembly (16) into the floor unit (12) at a geometric location of the floor unit (12) which, as seen in the direction of advance (V), is located in front of a center of area or center of mass of the floor unit; and/or
- **that** the floor unit (12) comprises a fastening device by means of which the joint assembly (16) can be variably fastened to the floor unit (12) at different fastening positions along the direction of advance (V); and/or
- **that** a mass ratio between floor unit (12) and guide member (14) ranges between 1:5 and 1:1 or between 1:1 and 5:1; and/or
- **that** the floor cleaning device (10) further comprises a parking state, wherein in the parking state the floor unit (12) is displaceable relative to the guide member (14) into a space-saving parking position and lockable in such position; and/or
- **that** the support device is configured to fully lock the guide member with respect to the floor unit, so that pivoting about the first pivot axis and, where applicable, about the second pivot axis, is blocked at least in a predetermined angular range.

14. Support device (90) for a floor cleaning device according to any one of the preceding claims, preferably comprising a base (94) by means of which it is attachable either to a shaft (40) or to the floor unit (12), as well as at least one support strut which introduces the weight force of the shaft (40) into the floor unit (12) permanently or by displacement into a support position.

15. Support device (90) of claim 14, wherein the support device (90) comprises a locking bracket (92), which is preferably pivotable, wherein the locking bracket (92) is configured to block any pivoting of the guide member about the first pivot axis (A) or to block pivoting only from a predetermined pivot angle.

## Revendications

1. Dispositif de nettoyage de sol (10), en particulier dispositif de nettoyage de sol par récurage-aspiration (10), comprenant :
- une unité de sol (12) à laquelle est associée une direction d'avancement (V) parallèle à une surface de sol à nettoyer,
- un outil (18, 20) qui est associé à l'unité de sol (12) et qui est en contact avec la surface de sol dans un état de fonctionnement, l'outil (18, 20) étant mobile par rapport à la surface de sol au moyen d'un entraînement ;
- une partie de guidage (14) pour guider le dispositif de nettoyage de sol (10) ; et
- un système d'articulation (16) qui relie de manière articulée l'unité de sol (12) et la partie de guidage (14) ;
dans lequel le dispositif de nettoyage de sol (10) est conçu pour produire une action d'avancement par rapport à la surface de sol dans la direction d'avancement (V),
dans lequel le système d'articulation (16) est réalisé avec une première articulation de pivotement qui comprend une première plage de pivotement avec un premier axe de pivotement (A) défini ou virtuel et autorise un mouvement de pivotement de la partie de guidage (14) par rapport à l'unité de sol (12) autour de la première plage de pivotement, en particulier autour du premier axe de pivotement (A),
dans lequel le premier axe de pivotement (A) est situé dans un premier plan d'axe de pivotement (E) qui s'étend perpendiculairement à la surface de sol et contient un vecteur de direction définissant la direction d'avancement (V),
**caractérisé en ce que**
dans un état de fonctionnement de manoeuvre, la partie de guidage (14) peut pivoter autour du premier axe de pivotement (A) par rapport à l'unité de sol (12), dans lequel la partie de guidage (14) peut être fixée ou soutenue temporairement dans le premier plan d'axe de pivotement (E) par rapport à l'unité de sol (12) ou au sol, dans lequel, suite au mouvement de pivotement de la partie de guidage (14) autour du premier axe de pivotement (A), par l'intermédiaire du soutien de la partie de guidage (14) dans le plan d'axe de pivotement (E), l'effet d'avancement provoque un couple de rotation de l'unité de sol (12) sur la surface de sol qui favorise la manoeuvre du dispositif de nettoyage de sol (10).

2. Dispositif de nettoyage de sol (10) selon la revendication 1, **caractérisé en ce que**
- le premier axe de pivotement (A) forme avec le vecteur de direction (V) définissant la direction d'avancement, dans l'état de fonctionnement de manoeuvre, un angle aigu compris dans une plage de 5° à 85°, de préférence de 15° à 45° ; ou **en ce que**
- la première articulation de pivotement peut être fixée de manière permanente à l'unité de sol (12) autour du premier axe de pivotement ou être bloquée dans des positions prédéterminées qui assurent, dans l'état de fonctionnement de manoeuvre, l'orientation du premier axe longitudinal (A) par rapport au vecteur de direction (V) définissant la direction d'avancement.

3. Dispositif de nettoyage de sol (10) selon l'une des revendications 1 ou 2, **caractérisé en ce que** le système d'articulation (16) est formé avec une deuxième articulation de pivotement qui comprend une deuxième plage de pivotement avec un deuxième axe de pivotement (B) défini ou virtuel et autorise un mouvement de pivotement de la partie de guidage (14) par rapport à l'unité de sol (12) autour de la deuxième plage de pivotement, dans lequel le deuxième axe de pivotement (B) s'étend essentiellement parallèlement à la surface de sol et transversalement au premier axe de pivotement (A).

4. Dispositif de nettoyage de sol (10) selon la revendication 3, **caractérisé en ce que** le système d'articulation (16) est associé fonctionnellement à un moyen de soutien (90) qui, dans l'état de fonctionnement de manoeuvre, soutient la partie de guidage ou le système d'articulation (16) avec la première articulation de pivotement par rapport à l'unité de sol (12) ou par rapport au sol, au moins temporairement ou/et au moins partiellement, dans lequel il est prévu en particulier
- que le moyen de soutien (90) peut être bloqué au moins temporairement dans au moins une position de blocage, de préférence dans au moins deux, de manière particulièrement préférée dans au moins trois positions de blocage ; ou
- que le moyen de soutien (90) peut être bloqué en continu.

5. Dispositif de nettoyage de sol (10) selon la revendication 4, **caractérisé en ce que**
- le moyen de soutien (90) est réalisé rigide ; et/ou **en ce que**
- le moyen de soutien (190) comprend un élément ressort (192) qui présente un effet d'appui, de préférence un effet d'appui progressif, en fonction de l'angle entre le premier axe de pivotement (A) et le vecteur de direction (V) définissant la direction d'avancement ; et/ou en ce que
- un élément d'amortissement est associé au moyen de soutien (90).

6. Dispositif de nettoyage de sol (10) selon l'une quelconque des revendications 3 à 5, **caractérisé par** un moyen de soutien (92, 210) associé à la première plage de pivotement avec son premier axe de pivotement (A), qui est conçu pour soutenir au moins partiellement la partie de guidage (14) lors du pivotement autour du premier axe de pivotement (A) par rapport à l'unité de sol (12) à partir d'un angle de pivotement prédéfini ou prédéfinissable.

7. Dispositif de nettoyage de sol (10) selon l'une quelconque des revendications précédentes, **caractérisé en ce que** le moyen de soutien (210) est conçu pour soutenir ou guider la partie de guidage lors du pivotement autour du premier axe de pivotement (A) par rapport à l'unité de sol (12), de préférence le long d'une trajectoire en forme d'arc, dans lequel le moyen de soutien (210) est de préférence conçu pour soutenir la partie de guidage (14) de manière élastique lors du pivotement autour du premier axe de pivotement (A), de préférence de manière progressivement élastique avec un angle de pivotement croissant dans les deux sens de pivotement.

8. Dispositif de nettoyage de sol (10) selon l'une quelconque des revendications 3 à 7, **caractérisé en ce que** le système d'articulation (16) comprend un élément de liaison (62) qui relie la première articulation de pivotement à la deuxième articulation de pivotement (B), dans lequel l'élément de liaison (62) peut pivoter par rapport à l'unité de sol (12) autour du deuxième axe de pivotement (B) et la partie de guidage (14) peut pivoter par rapport à l'élément de liaison (62) autour de la première plage de pivotement avec son premier axe de pivotement (A), dans lequel l'élément de liaison (62) peut de préférence être soutenu, éventuellement de manière élastique, par rapport à l'unité de sol (12).

9. Dispositif de nettoyage de sol (10) selon la revendication 4 et l'une quelconque des revendications précédentes, **caractérisé en ce que**
- le moyen de soutien (90) est associé à l'élément de liaison (62) et comprend un élément de soutien (106) qui, dans l'état de fonctionnement de manoeuvre, est en contact de soutien avec l'unité de sol (12) ; et/ou **en ce que**
- le moyen de soutien (90) est réalisé de manière intégrée avec le système d'articulation (16) ou sous forme de groupe de construction séparé qui peut être monté sur le dispositif de nettoyage de sol (10) de préférence de manière modulaire et peut en être détaché ; et/ou **en ce que**
- le système d'articulation (16) est réalisé sous forme de double articulation à cardan et que le moyen de soutien (90) ou au moins l'un des moyens de soutien (90) est réalisé de manière intégrée avec la double articulation à cardan.

10. Dispositif de nettoyage de sol (10) selon la revendication 4 et l'une quelconque des revendications précédentes, **caractérisé en ce que** le moyen de soutien (90) est réalisé de manière à pouvoir être activé ou désactivé par un opérateur en fonction du besoin, dans lequel le moyen de soutien peut de préférence être pivoté par un opérateur entre une position de fonctionnement et une position de stationnement, dans lequel le moyen de soutien peut de préférence être bloqué dans au moins l'une de la position de fonctionnement et de la position de stationnement.

11. Dispositif de nettoyage de sol (10) selon la revendication 4 et l'une quelconque des revendications précédentes, **caractérisé en ce qu'**un élément d'adhérence (116), en particulier un aimant, est associé au moyen de soutien (90), ledit élément étant conçu pour empécher le moyen de soutien (90) de pivoter à l'encontre de la direction de soutien jusqu'à une force limite lors du soutien, dans lequel le moyen de soutien fournit de préférence, par l'intermédiaire de l'élément d'adhérence, une liaison essentiellement par complémentarité de forme et/ou par adhérence entre le moyen de soutien et la partie de guidage (14) ou l'unité de sol (12).

12. Dispositif de nettoyage de sol (10) selon l'une quelconque des revendications 3 à 11, **caractérisé en ce que** le deuxième axe de pivotement (B) est orienté essentiellement perpendiculairement par rapport au premier axe de pivotement (A).

13. Dispositif de nettoyage de sol (10) selon l'une quelconque des revendications précédentes, **caractérisé en ce que**
- la partie de guidage (14) comprend un axe longitudinal orienté de préférence perpendiculairement au premier axe de pivotement (A) et éventuellement perpendiculairement au deuxième axe de pivotement (B) ; et/ou **en ce que**
- le système d'articulation (16) peut être monté sur l'unité de sol (12) de telle sorte que le poids de la partie de guidage (14) est introduit dans l'unité de sol (12) par l'intermédiaire du système d'articulation (16) à un lieu géométrique de l'unité de sol (12) qui, vu dans la direction d'avancement (V), se trouve devant un centre de gravité de surface ou un centre de masse de l'unité de sol ; et/ou **en ce que**
- l'unité de sol (12) comprend un dispositif de fixation au moyen duquel le système d'articulation (16) peut être fixé de manière variable à différentes positions de fixation le long de la direction d'avancement (V) sur l'unité de sol (12) ; et/ou **en ce que**
- un rapport de masse entre l'unité de sol (12) et la partie de guidage (14) se situe dans la plage de 1:5 à 1:1, ou 1:1 à 5:1 ; et/ou **en ce que**
- le dispositif de nettoyage de sol (10) comprend en outre un état de stationnement, dans lequel l'unité de sol (12) peut être déplacée dans l'état de stationnement par rapport à la partie de guidage (14) dans une position de stationnement à faible encombrement et être bloquée dans celle-ci ; et/ou **en ce que**
- le moyen de soutien est conçu pour verrouiller complètement la partie de guidage par rapport à l'unité de sol, de sorte qu'un pivotement autour du premier axe de pivotement et éventuellement autour du deuxième axe de pivotement est bloqué au moins dans une plage angulaire prédéterminée.

14. Moyen de soutien (90) pour un dispositif de nettoyage de sol selon l'une quelconque des revendications précédentes, comprenant de préférence une base (94) par laquelle il peut être monté soit sur un arbre (40), soit sur l'unité de sol (12), ainsi qu'au moins une jambe de force qui introduit de manière permanente ou par déplacement dans une position d'appui le poids de l'arbre (40) dans l'unité de sol (12).

15. Moyen de soutien (90) selon la revendication 14, dans lequel le moyen de soutien (90) comprend un étrier de blocage (92) qui est de préférence pivotant, ledit étrier de blocage (92) étant conçu pour bloquer tout pivotement de la partie de guidage autour du premier axe de pivotement (A) ou pour bloquer un pivotement uniquement à partir d'un angle de pivotement prédéterminé.
